# EUROPÄISCHE PATENTANMELDUNG

(11) **EP 1 560 094 A1**
(43) Veröffentlichungstag der Anmeldung: **03.08.2005**
(21) Anmeldenummer: 04001688.3
(22) Anmeldetag: 27.01.2004
(51) Int. Cl.: G05B 19/418, G05B 19/042, G06F 9/46

(54) **Bereitstellung von Diensten innerhalb eines Netzwerks mit gekoppelten Rechnern**

(71) Anmelder: SIEMENS AKTIENGESELLSCHAFT, 80333 München (DE)
(72) Erfinder: Dinges, Clemens, 90587 Obermichelbach (DE); Drinjakovic, Dino, 52072 Aachen (DE); Epple, Ulrich, Prof., 35614 Asslar-Berghausen (DE); Gast, Christiane, 90455 Nürnberg (DE); Schlereth, Michael, 91452 Wilhermsdorf (DE)

(57) **Zusammenfassung**

Die Erfindung betrifft ein System sowie ein Verfahren zur Bereitstellung von Diensten (1,2) innerhalb eines Netzwerks (3) mit gekoppelten Rechnern (4,5), wobei die Rechner Speichermittel (20) zur Speicherung von Objekten (7,8) aufweisen. Die Objekte weisen Mittel (21) zum Laden. Speichern und Verarbeiten von Beschreibungen (11) von Gruppen (9,10) und Mittel (22) zum Laden, Speichern und Ausführen von zugeordneten Diensten (1,2) auf. Einer Gruppe (9,10) sind jeweils die Objekte (7,8) zugehörig, die die Beschreibung (11) der Gruppe gespeichert haben, wobei die Beschreibung (11) einer Gruppe eine Semantik der zugeordneten Dienste (1,2) bestimmt. Die Objekte (7,8) besitzen Suchmittel (33) zum parallelen Suchen innerhalb verschiedener Gruppen (9,10) nach Objekten (7,8) mit den der jeweiligen Gruppe (9,10) zugeordneten und von den jeweiligen Objekten (7,8) ausführbaren Diensten (1,2) und weitere Mittel (23) zum Initiieren der Ausführung der von einem anderen Objekt der Gruppe ausführbaren Dienste (1,2).

## Beschreibung

Die Erfindung betrifft ein System sowie ein Verfahren zur Bereitstellung von Diensten innerhalb eines Netzwerks mit gekoppelten Rechnern.

Die DE 101 59 931 A1 beschreibt ein Verfahren zum Zugriff auf Dienste eines verteilten Automatisierungssystems mit einer Mehrzahl von Automatisierungsgeräten durch eines der Automatisierungsgeräte. Dabei bilden Informationen über ein zu wartendes Automatisierungsgerät ein Selektionskriterium, anhand dessen automatisch Dienste zur Wartung des zu wartenden Automatisierungsgerätes gesucht werden. Der Zugriff erfolgt dabei innerhalb eines Netzwerkes von Automatisierungsgeräten, wobei jedes Automatisierungsgerät Kommunikationsteilnehmer innerhalb des Netzwerkes ist und wobei zwischen jeweils zwei Automatisierungsgeräten zumindest zeitweise eine so genannte Peer-to-Peer-Verbindung besteht. Bei einem Netzwerk, das Peer-to-Peer-Kommunikation ermöglicht, wird allen Kommunikationsteilnehmern eine Möglichkeit zum gleichberechtigten Zugriff auf das Netzwerk gegeben. Dabei kann jeder Kommunikationsteilnehmer anderen Kommunikationsteilnehmern Informationen und Dienstleistungen anbieten und seinerseits von anderen Kommunikationsteilnehmern angebotene Informationen und Dienstleistungen nutzen. Daneben wird noch die Möglichkeit geboten, Informationen und Dienstleistungen auf anderen Kommunikationsteilnehmern zu suchen und zu lokalisieren und anschließend auf diese Funktionen oder Dienstleistungen zuzugreifen.

Der Erfindung liegt die Aufgabe zugrunde, die Bereitstellung von Diensten innerhalb eines Netzwerks mit gekoppelten Rechnern zu vereinfachen.

Diese Aufgabe wird durch ein System mit den im Anspruch 1 genannten Merkmalen gelöst. Es wird ein System zur Bereitstellung von Diensten innerhalb eines Netzwerks mit gekoppelten Rechnern vorgeschlagen,
- wobei die Rechner Speichermittel zur Speicherung von Objekten aufweisen,
- wobei die Objekte erste Mittel zum Laden, Speichern und Verarbeiten von Beschreibungen von Gruppen aufweisen,
- wobei die Objekte zweite Mittel zum Laden, Speichern und Ausführen von den jeweiligen Gruppen zugeordneten Diensten aufweisen,
- wobei einer Gruppe jeweils die Objekte zugehörig sind, welche die Beschreibung der jeweiligen Gruppe gespeichert haben,
- wobei die Beschreibung einer Gruppe eine Semantik der der jeweiligen Gruppe zugeordneten Dienste bestimmt,
- wobei die Objekte Suchmittel zum parallelen Suchen innerhalb verschiedener Gruppen nach Objekten mit den der jeweiligen Gruppe zugeordneten und von den jeweiligen Objekten ausführbaren Diensten aufweisen und
- wobei die Objekte dritte Mittel zum Initiieren der Ausführung der von einem anderen Objekt der Gruppe ausführbaren, der jeweiligen Gruppe zugeordneten Dienste aufweisen.

Diese Aufgabe wird durch ein Verfahren mit den im Anspruch 18 genannten Merkmalen gelöst. Es wird ein Verfahren zur Bereitstellung von Diensten innerhalb eines Netzwerks mit gekoppelten Rechnern vorgeschlagen,
- wobei die Rechner Objekte speichern,
- wobei die Objekte Beschreibungen von Gruppen laden, speichern und verarbeiten,
- wobei die Objekte den jeweiligen Gruppen zugeordnete Dienste laden, speichern und ausführen,
- wobei einer Gruppe jeweils die Objekte zugehörig sind, welche die Beschreibung der jeweiligen Gruppe gespeichert haben,
- wobei die Beschreibung einer Gruppe eine Semantik der der jeweiligen Gruppe zugeordneten Dienste bestimmt,
- wobei die Objekte parallel innerhalb verschiedener Gruppen nach Objekten mit den der jeweiligen Gruppe zugeordneten und von den jeweiligen Objekten ausführbaren Diensten suchen und
- wobei die Objekte die Ausführung der von einem anderen Objekt der Gruppe ausführbaren, der jeweiligen Gruppe zugeordneten Dienste initiieren.

Die Erfindung ist die Basis einer insbesondere mehrschichtigen Architektur für ein dezentrales, selbstorganisierendes Informationssystem. Die modulare Systemstruktur ermöglicht dabei eine dynamische Erweiterbarkeit der Funktionalität des Systems und somit eine hohe Flexibilität im operativen Betrieb. Die Objekte werden auch als Peers (peer = gleichrangig) bezeichnet. Die Gruppen werden auch als semantische Gruppen bezeichnet. Die Beschreibung von Gruppen, d. h. die Definition einer semantischen Ordnungsstruktur, auch Gruppenentität genannt, ist in Peers nachladbar, insbesondere auch im stationären Betrieb. Damit ist es möglich, dynamisch neue Suchstrategien aber auch neue Funktionalität in das System einzubringen.

Das vorgeschlagene virtuelle Suchnetzwerk ist nicht von zentralen Einheiten abhängig, d. h. kein Knoten muss seine Verfügbarkeit im dynamischen System garantieren. Änderungen in der Netzwerktopologie können ohne großen Aufwand von den einzelnen Knoten adaptiert werden, ohne Änderung der gesamten Overlay-Struktur. Die Suche nach Diensten im Overlay-Netzwerk vermeidet so genannte flooding-Mechanismen.

Gemäß einer vorteilhaften Ausgestaltung des Systems weisen die Objekte vierte Mittel zum Auffinden, Entladen und/oder Definieren der Beschreibungen von Gruppen auf. Dadurch wird vermieden, dass der Operator einem Peer explizit mitteilen muss, welche Gruppenentität und somit auch welche Mitgliedschaft er laden soll. Man erhöht also den Autonomiegrad eines Peers, indem man ihm selbst die Entscheidung überlässt, welche Gruppenentität er besitzen möchte. Der Peer besitzt die Fähigkeit, selbständig Informationen über neue semantische Gruppen sammeln und den Aufenthaltsort der dazugehörigen Gruppenentitäten erfragen zu können. Identisch zu der Suche nach anwendungsspezifischen Informationen oder -diensten kann in einem speziellen, separaten Suchnetzwerk mit eigenen Vernetzungsregeln nach semantischen Gruppen gesucht werden. Derjenige Peer, der eine Anfrage nach einer bestimmten Gruppe erhält und Mitglied der gesuchten Gruppe ist, würde die entsprechende Information, in diesem Fall die Gruppenentität, an den anfragenden Peer senden, der diese dann selbständig lädt und Mitglied der gewünschten, semantischen Gruppe wird. Für dieses spezielle Suchnetzwerk kann sowohl eine geeignete Distanzfunktion als auch eine geeignete Vernetzungsstrategie festgelegt werden.

Gemäß einer weiteren vorteilhaften Ausgestaltung des Systems weisen die Objekte fünfte Mittel zum Auffinden und/oder Definieren der den Gruppen zugeordneten Dienste auf. Damit lassen sich insbesondere neue Dienste definieren.

Gemäß einer weiteren vorteilhaften Ausgestaltung des Systems weisen die Objekte sechste Mittel zum Ermitteln von Zugehörigkeiten des jeweiligen Objekts zu den Gruppen auf, so dass die Information über geladene Gruppenentitäten innerhalb des Peers zur Verfügung steht.

Gemäß einer weiteren vorteilhaften Ausgestaltung des Systems weisen die Objekte siebte Mittel zum Laden und Ausführen einer Distanzfunktion auf, wobei die Distanzfunktion zur Bestimmung der semantischen Distanz zwischen jeweils zwei Objekten vorgesehen ist. Eine semantische Näheberechnung ist in bisher bekannten Peer-to-Peer-Systemen nicht vorgesehen. In bekannten Systemen wird üblicherweise eine Hash-Funktion verwendet, um eine gegebene Dienstebeschreibung in einen systemweit eindeutigen, numerischen Wert zu transformieren (z. B. Freenet, Chord, Tapestry, CAN). Dieser Wert wird dann der Adresse desjenigen Knotens im Netzwerk zugeordnet, der diesen Dienst anbietet. Das Hauptproblem des Hashing-Ansatzes liegt in seiner mathematischen Charakteristik: Da die Generierung von Hash-Werten dem Erzeugen von gleichverteilten Zufallswerten entspricht, wird die semantische Nähe von Dienstebeschreibungen nicht in den Hashwerten repräsentiert, d. h. die gebildeten Nachbarschaften haben keine semantische Bedeutung innerhalb eines virtuellen Suchnetzwerks.

Achte Mittel zum Generieren einer Liste der Objekte mit der geringsten semantischen Distanz zu dem jeweiligen Objekt ermöglichen genau dies: Bildung von Nachbarschaften basierend auf der inhaltlichen Interpretation der im Netzwerk angebotenen Dienste und Informationen. Damit sind auch ungefähre Suchen und Bereichssuchen möglich, die mit hashbasierten Ansätzen nicht zu verwirklichen sind. Insbesondere wird vorgeschlagen, dass die Objekte neunte Mittel zur Beeinflussung der Suchmittel zum Suchen nach Objekten in Abhängigkeit der jeweiligen semantischen Distanz aufweisen. Wenn das System mehrere semantische Overlay-Netzwerke besitzt, können basierend auf der spezifischen Suche bereits vor inhaltlicher Analyse der Anfrage relevante Knoten herausgefiltert werden und so die Systemperformance erheblich erhöht werden, insbesondere, wenn Ergebnisse verschiedener Suchen kombinierbar sind.

Gemäß einer weiteren vorteilhaften Ausgestaltung des Systems weisen die Objekte zehnte Mittel zum Verarbeiten von Beschreibungen der Dienste auf.

Um die Suche zu beschleunigen weisen die Objekte gemäß einer weiteren vorteilhaften Ausgestaltung des Systems elfte Mittel zum Weiterleiten von Suchanfragen nach durch das jeweilige Objekt nicht ausführbaren Diensten an weitere Objekte innerhalb der jeweiligen Gruppe auf. Als vorteilhaft erweist sich zudem, wenn zwölfte Mittel zum Erkennen von neuen Objekten innerhalb einer Gruppe vorgesehen sind.

Insbesondere bei hierarchisch strukturierbaren Informationssystemen ist es vorteilhaft, wenn die Objekte einer Gruppe in hierarchischer Beziehung zueinander stehen. Im System sind vorteilhafterweise Dienste zur Bereitstellung von Informationen vorgesehen.

Besonders flexibel erweist sich ein System, wenn einem Objekt innerhalb einer Gruppe weitere Objekte der jeweiligen Gruppe nur partiell bekannt sind, wobei für das jeweilige Objekt alle weiteren Objekte der jeweiligen Gruppe zumindest mittelbar kommunikativ erreichbar sind. Das ist der Fall, wenn die Gruppen jeweils eine zusammenhängende Gruppe sind.

Eine einfache Art Suchanfragen im System zu übermitteln ergibt sich, wenn gemäß einer weiteren vorteilhaften Ausgestaltung des Systems die Objekte Kommunikationsmittel zur Übermittlung von Nachrichten aufweisen, wobei die Kommunikationsmittel Analysemittel zur Analyse des semantischen Inhalts der Nachrichten aufweisen. Allgemein versteht man unter einer Nachricht eine abgeschlossene Informationsmenge, die aufgrund bekannter oder unterstellter Abmachungen zwischen Kommunikationspartnern ausgetauscht wird. Semantik ist allgemein die Lehre von der inhaltlichen Bedeutung einer Sprache. Bei dem vorgeschlagenen System werden Informationen (z. B. Dokumente) mit Semantik, d. h. mit maschinenverständlicher Bedeutung, versehen. Als Semantik einer Nachricht bezeichnet man die Information, die sich durch die Interpretation des Inhalts einer Nachricht ergibt. Ziel ist die Entwicklung von maschinenlesbaren hin zu maschinenverständlichen Daten. Das vorgeschlagene System ist in der Lage sein, Nachrichten basierend auf der Analyse ihres semantischen Inhalts intelligent weiterzuleiten.

Ist das Netzwerk mit gekoppelten Rechnern ein industrielles Automatisierungssystem, so lässt sich insbesondere ein Prozessinformationssystems bereitstellen, das Zugriff auf Informationen und Dienste von Objekten in einem verteilten Automatisierungssystem mit selbstkonfigurierenden, mehrdimensionalen und dynamisch nachladbaren semantischen Ordnungsstrukturen ermöglicht.

Nachfolgend wird die Erfindung anhand der in den Figuren dargestellten Ausführungsbeispiele näher beschrieben und erläutert.

Es zeigen:
- FIG 1: ein System zur Bereitstellung von Diensten innerhalb eines Netzwerks mit gekoppelten Rechnern,
- FIG 2: die Systemkonfiguration für ein Anwendungsszenario,
- FIG 3: ein Ebenenmodell zur Beschreibung einer mehrschichtigen Architektur für ein dezentrales, selbstorganisierendes Informationssystem,
- FIG 4: ein Ebenenmodell, bei welchem jede Ebene durch eine additive Peergruppenzugehörigkeit gekennzeichnet ist,
- FIG 5: die Zusammensetzung des Gesamtsystems durch Objektkomponenten,
- FIG 6: die modulare Struktur eines Peers für ein semantisches Suchnetzwerk und
- FIG 7: die Implementierung einer Gruppenentität.

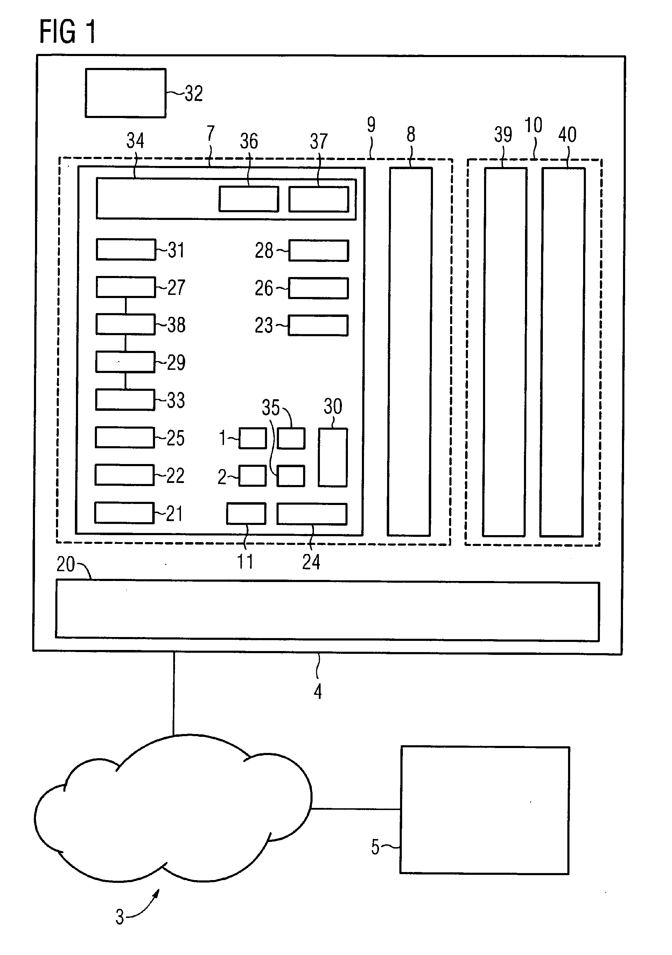

Figur 1 zeigt ein Ausführungsbeispiel eines Systems zur Bereitstellung von Diensten 1, 2 innerhalb eines Netzwerks 3 mit gekoppelten Rechnern 4, 5. Der Rechner 4 weist Speichermittel 20 zur Speicherung von Objekten 7, 8, 39, 40 auf. In Figur 1 sind zwei Gruppen 9, 10 dargestellt, denen die Objekte 7, 39 bzw. 8, 40 zugehörig sind. Das dargestellte Objekt 7 hat die Beschreibung 11 der Gruppe 9 gespeichert. Das Objekt 7 weist erste Mittel 21 zum Laden, Speichern und Verarbeiten der Beschreibung 11 der Gruppe 9 auf. Zudem weist das Objekt 7 zweite Mittel 22 zum Laden, Speichern und Ausführen von der Gruppe 9 zugeordneten Diensten 1, 2 auf. Die Beschreibung 11 der Gruppe 9 bestimmt eine Semantik der der Gruppe 9 zugeordneten Dienste 1, 2. Das Objekt 7 weist Suchmittel 33 zum parallelen Suchen innerhalb der verschiedenen Gruppen 9, 10 nach Objekten 7, 8, 39, 40 mit den der jeweiligen Gruppe 9, 10 zugeordneten und von den jeweiligen Objekten 7, 8, 39, 40 ausführbaren Diensten 1, 2 auf. Zudem weist das Objekt 7 dritte Mittel 23 zum Initiieren der Ausführung der von einem anderen Objekt 8 der Gruppe 9 ausführbaren, der Gruppe 9 zugeordneten Dienste auf. Das dargestellte Objekt 7 weist vierte Mittel 24 zum Auffinden, Entladen und/oder Definieren der Beschreibungen 11 von Gruppen 9, 10 auf. Zudem weist das Objekt 7 fünfte Mittel 25 zum Auffinden und/oder Definieren der den Gruppen 9, 10 zugeordneten Dienste 1, 2 auf. Mit sechsten Mitteln 26 des Objekts 7 können Zugehörigkeiten des Objekts 7 zu den Gruppen 9, 10 ermittelt werden. Das Objekt 7 weist siebte Mittel 27 zum Laden und Ausführen einer Distanzfunktion 38 auf, welche zur Bestimmung der semantischen Distanz zwischen jeweils zwei Objekten 7, 8 vorgesehen ist. Mit achten Mitteln 28 des Objekts 7 kann eine Liste der Objekte 8 mit der geringsten semantischen Distanz zu dem jeweiligen Objekt 7 generiert werden. Zur Beeinflussung der Suchmittel 33 in Abhängigkeit der jeweiligen semantischen Distanz weist das Objekt 7 neunte Mittel 29 auf. Mit zehnten Mitteln 30 des Objekts 7 werden Beschreibungen 35 der Dienste 1, 2 verarbeitet. Das Objekt 7 weist zudem elfte Mittel 31 zum Weiterleiten von Suchanfragen nach durch das Objekt 7 nicht ausführbaren Diensten an weitere Objekte 8 innerhalb der jeweiligen Gruppe 9 auf. Mit zwölften Mitteln 32 können neue Objekte 7, 8 innerhalb einer Gruppe 9, 10 erkannt werden. Das Objekt 7 weist Kommunikationsmittel 34 zur Übermittlung von Nachrichten 36 auf, wobei die Kommunikationsmittel 34 Analysemittel 37 zur Analyse des semantischen Inhalts der Nachrichten 36 aufweisen.

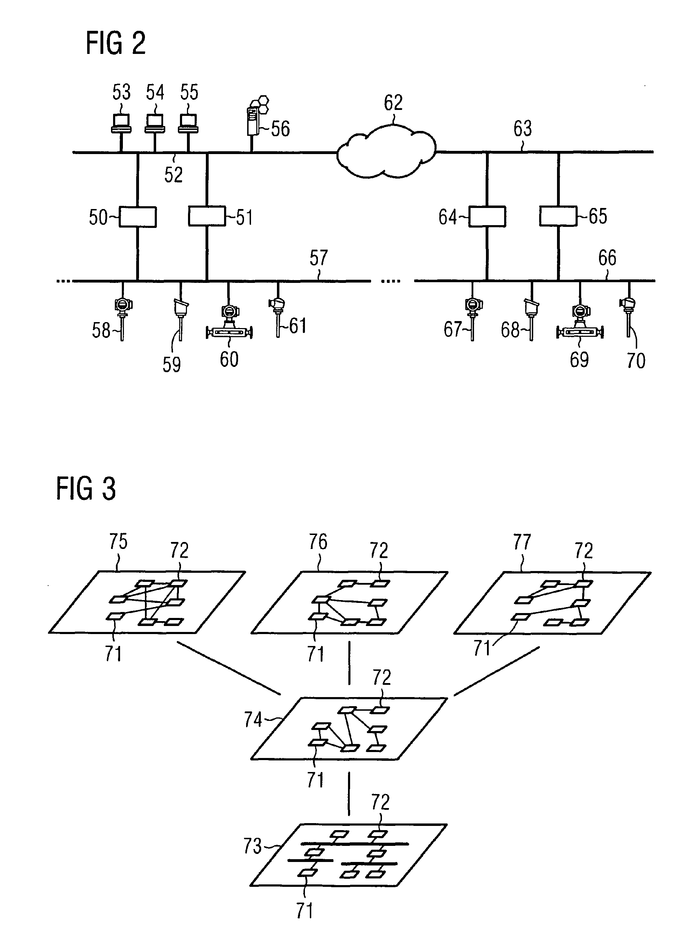

Figur 2 zeigt die Systemkonfiguration für ein Anwendungsszenario. Über ein Firmennetz 52 sind Rechner 53 - 55 mit Engineering- bzw. Anwendungsprogrammen, Managementinformationssysteme 56 sowie ein Prozessleitsystem 50 und eine speicherprogrammierbare Steuerung 51 miteinander verknüpft. Das Prozessleitsystem 50 und die speicherprogrammierbare Steuerung 51 sind über einen Feldbus 57 mit Feldgeräten 58 - 61 gekoppelt. Das Firmennetz 52 ist über ein Internet 62 mit einem weiteren Firmennetz 63 verbunden. Das weitere Firmennetz 63 ist über eine speicherprogrammierbare Steuerung 64 (SPS) sowie eine Engineeringstation 65 mit einem weiteren Feldbus 66 verbunden. Über den Feldbus 66 werden Nachrichten von und zu Feldgeräten 67 - 70 übermittelt.

Im Folgenden wird die Verwendung der Erfindung in der Prozessleittechnik beschrieben. Die Prozessleittechnik befasst sich mit Funktionen, Maßnahmen und Mitteln zum Führen von Prozessen und Anlagen in der Prozessindustrie. Im Vergleich zur Automatisierungstechnik liegt ihr Schwerpunkt weniger auf den signalverarbeitenden Mess-, Steuer- und Regelfunktionen (MSR), die zu selbsttätigen Prozesseingriffen führen, sondern mehr in der gesamtheitlichen Betrachtung aller operativen Aufgaben, welche die Unternehmensressource "Produktinformation" betreffen. In diesem Zusammenhang spricht man auch von der informationsorientierten Prozessleittechnik. Die überwiegend signalorientierte Automatisierungstechnik kann hierbei als Untermenge der informationsorientierten Prozessleittechnik aufgefasst werden.

Als prozessleittechnische Digitalrechner kommen vor allem Prozessleitsysteme (PLS), speicherprogrammierbare Steuerungen (SPS), Mikro-Controller-basierte "intelligente" Feldgeräte sowie Industrie-PC zum Einsatz. Diese werden über Kommunikationssysteme, beispielsweise Feldbussysteme und Ethernetbasierte TCP/IP-Netzwerke zu einem verteilten, informationsverarbeitenden System vernetzt. Solch ein System besitzt Schnittstellen zum leitenden Prozess, zum Bedienpersonal und aufgrund fortschreitender Vernetzung und Globalisierung - in zunehmendem Maße zu Bürosoftware und transaktionsorientierten, betrieblichen Informationssystemen im Intra- bzw. Internet, wie z. B. Enterprise Ressource Planning-Systemen (ERP) oder Manufacturing Information-Systemen (MIS).

Die Informationsschnittstelle zum Prozess besteht im wesentlichen aus Mess- und Stellsignalen mit unmittelbarer physikalischer Bedeutung für den verfahrenstechnischen Prozess und wird durch Sensoren und Aktoren realisiert. Die Rückführung von geeigneten Stellsignalen in den Prozess aus Messsignalen ist Aufgabe der so genannten Basisautomatisierung. Dieser Vorgang wird heute bereits weitgehend theoretisch und praktisch beherrscht.

Für ein funktionierendes Zusammenspiel mit betrieblichen Informationssystemen und dem Bedienpersonal reicht die Betrachtung der Prozesssignale heutzutage jedoch nicht mehr aus. In der Produktionsverfolgung, der Qualitätssicherung, der Geräteverwaltung und Instandhaltung werden Zusatzinformationen benötigt, und den einzelnen Entitäten eines Produktionsprozesses (Produkten, Anlagen, Geräten) zugeordnet. Der Aufenthaltsort dieser Informationen ist bei heutzutage gängigen Leitsystemstrukturen über das gesamte System verteilt. Das prozessleittechnische Softwaresystem muss somit nicht nur Automatisierungs-, sondern insbesondere auch Informationsmanagementaufgaben übernehmen ("Informationsbroker").

Damit verbunden ist die Notwendigkeit, verteilte und insbesondere dezentrale Systeme zu beherrschen. Je komplexer die zu leitenden, technischen Systeme werden, desto offensichtlicher stoßen zentralistische Konzepte, wie man sie heute noch bei einigen Prozessleitsystemfamilien antrifft, an ihre Grenzen. In der Praxis resultieren zudem viele Probleme aus der Verteilung der Software auf dezentrale Rechnerknoten mit verschiedenen Betriebssystemen und unterschiedlicher Architektur und Skalierung der Hardware. Problematisch ist zudem, dass es sich bei der prozessleittechnischen Software in ihrer Gesamtheit um inhomogene, teilweise mit völlig verschiedenen Mitteln modellierte und implementierte Anwendungen unterschiedlicher Hersteller und Versionen handelt. Oft sind diese Probleme auf die langen Betriebszeiten prozessleittechnischer Hard- und Software zurückzuführen und damit schwer zu vermeiden.

In heutigen Automatisierungssystemen muss einem Klienten, der Dienste bzw. Informationen anderer Objekte des Systems nutzen möchte, vorab in einer Konfigurationsphase explizit mitgeteilt werden, in welchen Systemkomponenten sich die betreffenden Objekte befinden. So muss z. B. festgelegt werden, an welche Komponente Alarmdaten zu senden sind oder einem Visualisierungssystem mitgeteilt werden, in welchen Komponenten es welche Messwerte lesen kann. In integrierten Leitsystemen bieten die Hersteller zur Vereinfachung dieses aufwändigen Konfigurationsvorgangs Funktionen des Engineeringsystems an, die ein automatisches Zusammenstellen und Laden der entsprechenden Konfigurationsdateien unterstützen.

Eine ex-ante-Konfigurierung ist aber nicht immer ausreichend, insbesondere bei zukünftigen Systemstrukturen:
- In vielen Fällen ergeben sich die Anforderungen, eine Objektinstanz zu nutzen, erst nachträglich während des Betriebs, z. B. aufgrund eines spontan auftretenden Problems oder einer neuen automatisierungs- bzw. prozesstechnischen Fragestellung.
- Die Verkopplung der Rechner- und Mikro-Rechnersysteme mit leistungsfähigen Bussystemen bis in die Feldebene eröffnet auch für prozessnahe Objektinstanzen die Möglichkeit der freien Zuordnung und dynamischen Verschiebbarkeit zwischen verschiedenen Ausführungskomponenten. Dies kann z. B. für eine dynamische Rekonfiguration des Systems während des Betriebes genutzt werden, z. B. situationsbedingt zur Erhöhung der Verfügbarkeit bei Komponentenausfall oder durch gezielte Optimierungsmaßnahmen zur Verbesserung der Busund Prozessorlastverteilung im Netzwerk.
- In heterogenen Informationssystemen ist die Unterstützung der Konfiguration durch das Engineeringsystem nur bedingt möglich. Insbesondere im Bereich der Betriebsleitsysteme und beim Anschluss von Alt- und Fremdsystemen nimmt daher der Konfigurationsaufwand deutlich zu.

Die oben genannten Anforderungen werden in bekannten Systemen durch Umkonfigurierungen in einer Engineeringphase außerhalb des laufenden Betriebs durchgeführt, d. h. die Konfiguration ist in der Regel während des Betriebs statisch. Bei Systemen, die während des Betriebs umkonfiguriert werden können, muss eine Konfigurationsänderung z. B. für eine Kommunikationsadresse eines Geräts, in alle anderen Geräte des Systems geladen werden. Dadurch dauert ein Update des Automatisierungssystems sehr lange.

Im Folgenden wird ein Architekturentwurf und die Realisierung eines verteilten, dezentral organisierten Systems beschrieben, das Netzknoten ("Peers") beinhaltet, zwischen denen die Kommunikationsverbindung nicht a priori, d. h. nicht per Engineering festgelegt ist, sondern prinzipiell erst bei Bedarf durch einen Suchvorgang im laufenden Betrieb hergestellt wird. Peers haben dabei die Eigenschaft, dass sie sowohl Quelle wie auch Senke einer Kommunikationsverbindung sein können. Die Kommunikationsverbindung wird dazu benutzt, Dienste (z. B. einen Archivierungsdienst) anzufordern. Ein spezieller Dienst ist die Bereitstellung von Information (z. B. eines bestimmten Messwerts). Ein solches System wird auch Peer-to-Peer-System genannt (Peer-to-Peer = P2P).

Solche P2P-Systeme sind aus dem Internet bekannt (z. B. Napster, Gnutella). Die Suchstrategie, die bei solchen bekannten Systemen angewendet wird, ist jedoch für alle beteiligten Peers identisch und basiert auf reiner Textsuche bzw. auf eigenschaftsorientierten Suchkriterien.

Im Folgenden werden einige bereits prinzipiell verfügbare Schlüsseltechnologien beschrieben, welche in vielen Sprachen und Softwarearchitekturen in unterschiedlicher Ausprägung vorhanden sind:
- Objektorientierte Modellierung
- Komponententechnologien
- Internet-Technologien (XML, SOAP, WSDL, Web Services)

Im Rahmen der beschriebenen Ausführungsbeispiele der Erfindung werden diese Schlüsseltechnologien kombiniert und auf die Belange der Prozessleittechnik zugeschnitten. Dabei werden auch Anforderungen der Skalierbarkeit, der Effizienz, der Online-Fähigkeit und der Plattformunabhängigkeit berücksichtigt.

Bei bekannten, "klassischen" P2P-Systemen bezeichnet "Peer-to-Peer" die Möglichkeit von Rechnern, anderen Rechnern Dienste anzubieten, Dienste, die von anderen Rechnern angeboten werden, zu suchen und zu lokalisieren, und anschließend auf diese Dienste zuzugreifen, und dadurch sowohl Server- als auch Klienteneigenschaften und -funktionalitäten zu vereinen. Der Begriff "Rechner" bezeichnet in diesem Zusammenhang jede Art von Computersystem. In diesem Zusammenhang bedeutet "klassisch" die Existenz einer vordefinierten, starren Ordnungsstruktur sowie den Einsatz von nichtsemantischen Suchstrategien. Die meisten P2P-Systeme bieten in der Regel nur einen einzigen Dienst an, üblicherweise die Suche nach Dokumenten. Ein Klient ist eine Softwareanwendung, die eine Dienstleistung (z. B. eine Information) einer anderen Softwareanwendung in Anspruch nimmt). Ein Server ist eine Softwareanwendung, die für eine andere Softwareanwendung eine Dienstleistung (z. B. eine Information) auftragsorientiert zur Verfügung stellt.

Die Erweiterung des P2P-Gedankens besteht insbesondere in der Anpassung der Suchstrategie an den Inhalt der Suchanfrage bzw. die Gruppenzugehörigkeit der Suchpartner sowie in der Möglichkeit, auf ein gemeinsames P2P-Basisnetzwerk parallel und dynamisch verschiedene Suchalgorithmen laden zu können.

Im Folgenden erfolgt eine Analyse und Diskussion der zur Zeit existierenden P2P-Architekturen im Hinblick auf Anforderungen an ein P2P-System als Architektur mit Mitteln zur Realisierung prozessleittechnischer Anwendungen. Neben Modellierungsmöglichkeiten werden auch Laufzeitaspekte, z. B. das Verwenden von Metainformationen und das Bereitstellen von Diensten durch eine Anwendungsschnittstelle, betrachtet.

Auf Basis dieser Anforderungen wird dann im Weiteren das Architekturmodell eines P2P-Systems mit selbstkonfigurierenden, mehrdimensionalen und dynamisch nachladbaren, semantischen Ordnungsstrukturen beschrieben. Dieses P2P-System stellt für die jeweiligen, spezifischen Anwendungen die Infrastruktur bereit.

Die Suchstrategien in bekannten P2P-Systemen erweisen sich als äußerst ineffizient und ermöglichen entweder keine oder nur eine unzureichende Skalierbarkeit des Systems. Diese Ineffizienz basiert auf der Tatsache, dass einige P2P-Systeme ein Overlay-Netzwerk mit zufälligen Nachbarschaften bilden, in denen Anfragen blind von Knoten zu Knoten weitergeleitet werden. Als Alternative dazu existieren Vorschläge für P2P-Systeme, die eine relativ starre Overlay-Struktur vorgeben, bei welcher Informationen basierend auf so genannten Hash-Funktionen bei Knoten abgelegt werden. Der einer Information zugewiesene Hashwert ermöglicht es dann, diese Informationen leichter im System wiederzufinden.

Prinzipiell existieren für eine Architektur und die dazugehörige Suchstrategie in einer verteilten Umgebung drei grundsätzliche Ansätze, die im Folgenden ausführlich beschrieben werden: Eine zentrale Diensteverwaltung (central service repository), Fluten des Netzes mit Anfragen (flooding / broadcasting) und der Einsatz von verteilten Hash-Tabellen (distributed hash table systems).

In einer zentralistischen Architektur verwalten ein oder wenige ausgewählte zentrale Server die Beschreibungen aller Dienste, die im Netzwerk angeboten werden. Aus diesem Grunde senden Diensteanbieter eine Beschreibung ihrer Dienste an einen dieser Server, wohingegen Dienstesuchende diese Server kontaktieren, wenn sie eine Beschreibung sowie den Aufenthaltsort eines bestimmten Dienstes erfahren möchten. Um die zentralen Diensteverzeichnisse stets auf dem aktuellen Stand zu halten, müssen veraltete Dienste, d. h. Dienste, die nicht mehr im Netzwerk verfügbar sind, manuell ausgetragen werden oder periodisch innerhalb einer vordefinierten Zeitspanne aus dem Verzeichnis entfernt werden.

Diese Architektur ist nicht geeignet für dynamische Netzwerke, da kein Server im Zuge häufiger Topologieänderungen des Netzwerks seine Erreichbarkeit garantieren kann. Zudem stellen zentrale Server einen "single point of failure" dar. Ein Ausfall bereits weniger Knoten würde das gesamte System außer Betrieb setzen. Diese verwundbare Stelle des Systems ist oft Ziel für systemexterne Angriffe.

In anderen Netzwerkbereichen ist diese Architektur jedoch weit verbreitet. So verwenden CORBAs Trading Object Service, Suns Jini und Bluetooth solch zentralistische Strukturen. Dies gilt auch für Protokolle wie Napster und seine Klone oder das Service Location Protocol (SLP). Auch Web Services, die in e-Business-Anwendungen immer mehr an Bedeutung gewinnen, werden üblicherweise mittels UDDI (Universal Description, Discovery and Integration of Web Services) in zentralen Verzeichnissen verwaltet. Letztlich basieren auch Ansätze für eine Suche nach Diensten auf Agentenplattformen, wie z. B. LEAP (Lightweight Extensible Agent Plattform) und FIPA-OS (Foundation for Intelligent Physical Agents), hauptsächlich auf zentralistischen Diensteverwaltungsstrukturen.

Im direkten Gegensatz zu zentralen Verzeichnissen stehen Broadcasting-Architekturen. Diensteanbieter verteilen ihre Dienstebeschreibungen nicht auf anderen Knoten im Netzwerk, sondern belassen sie lokal beim Aufenthaltsort der Dienste selbst. Dies führt dazu, dass Suchanfragen nach einem bestimmten Dienst an alle Mitglieder des Netzwerks weitergeleitet werden müssen, wo sie mit den vorhandenen Dienstebeschreibungen verglichen werden. Um wiederholtes Ankommen von ein- und derselben Anfrage bei einem Knoten zu reduzieren, wurden verfeinerte Flooding-Algorithmen entwickelt. Vollständig vermeiden lässt sich dies jedoch nicht.

Im Allgemeinen sind solche Broadcasting-Mechanismen wegen ihres hohen Bandbreiten-Anspruchs nicht für Netzwerke geeignet. Zudem verringern unnötige Anfragen die Leistungsfähigkeit der einzelnen Knoten bei der Bearbeitung von relevanten Anfragen. Dennoch könnte in Netzwerkbereichen mit extrem hoher Topologiedynamik Broadcasting das einzig mögliche Mittel sein. Typische Vertreter der Broadcasting-Strategie sind SSDP (Simple Service Discovery Protocol) sowie vollständig dezentrale file-sharing Protokolle wie Gnutella oder JXTA Search.

Eine weiterer Ansatz neben zentralserverbasierten und broadcast-orientierten Ansätzen ist das Hashing. Die bekanntesten Vertreter des Hashing-Ansatzes sind Freenet, Chord, Tapestry und CAN. Allgemein wird eine Hash-Funktion verwendet, um eine gegebene Dienstebeschreibung in einen systemweit eindeutigen, numerischen Wert zu transformieren. Dieser Wert wird dann der Adresse desjenigen Knotens im Netzwerk zugeordnet, der diesen Dienst anbietet. Das Hauptproblem des Hashing-Ansatzes liegt in seiner mathematischen Charakteristik: Da die Generierung von Hash-Werten dem Erzeugen von gleichverteilten Zufallswerten entspricht, wird die semantische Nähe von Dienstebeschreibungen nicht in den Hashwerten repräsentiert. Deshalb kann Hashing nur für Dienstebeschreibungen mit sehr wenig Semantik verwendet werden (z. B. Dienstebeschreibung als boolesche Verknüpfung von Schlüsselwörtern). Semantisch reiche Beschreibungen, z. B. ontologiebasierte Ansätze, die eine semantische "Näheberechnung" ermöglichen, können mit Hilfe von Hashfunktionen nicht sinnvoll verarbeitet werden. In DHT-Systemen stehen die zu verwaltenden Ressourcen, d. h. Informationen und Dienste, in keinerlei Verhältnis zueinander.

Obwohl Hashing eine gute Performance aufweist bei gezielten Suchen, bei denen der Suchschlüssel eindeutig bekannt ist, so sind sie nicht effektiv für ungefähre Suchen und Bereichssuchen.

Die Idee, Informationen dort abzulegen bzw. im Laufe der Zeit dort hinzubewegen, wo relevante Anfragen ihren Ursprung haben, wurde bereits in verteilten Datenbanksystemen umgesetzt. Die Algorithmen, die für verteilte Datenbanken verwendet wurden, basieren jedoch auf zwei fundamentalen Annahmen, die auf P2P-Systeme nicht zutreffen: Dass eine kleine Anzahl von stabilen Knoten existiert und dass der Nutzer des Systems die volle Kontrolle über den Aufenthaltsort der Informationen besitzt. In einem weltweit verteilten P2P-Systemen ist es jedoch wahrscheinlich, dass bestimmte Knoten eventuell nicht bereit sind, beliebige Informationen zur Verwaltung anzunehmen oder beliebige Nachbarschaften einzugehen.

DHT-Systeme basieren, wie alle bestehenden P2P-Systeme, auf nur einem einzigen Overlay-Netzwerk. Betrachtet man ein Overlay-Netzwerk als eine endliche Menge von Knoten N, wobei jeder Knoten nᵢ ∈ N eine bestimmte, endliche Menge an Informationen I besitzt (dabei kann eine bestimmte Information in mehr als einem Knoten liegen), so ist jeder Knoten mit einer kleinen Zahl von Knoten (seinen so genannten Nachbarn) virtuell verbunden. Diese sind wiederum mit weiteren Knoten virtuell verbunden. Stellt man die Verbindung als ein Tripel (nᵢ, nⱼ, 1) dar, so sind nᵢ und nⱼ die verbundenen Knoten und 1 bezeichnet die Art der Verbindung. Die Menge von Verbindungen mit dem gleichen 1 bildet das Overlay-Netzwerk. In heutigen P2P-Systemen haben alle Verbindungen das gleiche 1. Dies ist eine rein willkürliche Beschränkung. Prinzipiell kann ein P2P-System mehrere Overlay-Netzwerk besitzen. In diesem Fall kann ein Knoten mit einem bestimmten Satz von Knoten über eine 1₁-Verbindung "benachbart" sein und über eine 1₂-Verbindung mit einer möglicherweise anderen Gruppe von Knoten. Dies würde die Performance einer Suche in einem System mit extrem vielen Knoten entscheidend verbessern. Das JXTA Framework der Firma SUN unterstützt zwar die Fähigkeit der Gruppenbildung in einem P2P-System, jedoch schreibt es weder die Struktur der Gruppen vor, noch wann Knoten einer Gruppe beitreten sollen oder wie eine Suche zwischen Gruppen ablaufen soll.

Die Analyse der verschiedenen Ansätze zeigt, dass keiner der Ansätze eine semantikbasierte Suche nach Diensten ermöglichen kann. Die existierenden Ansätze sind entweder nicht geeignet für Anwendungen in vollständig dynamischen Netzwerken (im Falle der serverbasierten Architekturen), setzen die Existenz von großen Bandbreiten voraus (im Falle des Broadcasting-Ansatzes), welche wegen der großen Ressourcenheterogenität der Netzwerkknoten nicht immer verfügbar sind, oder (im Falle von hashbasierten Architekturen) nur eine semantisch schwache Dienstebeschreibung unterstützen. Die vorliegende Erfindung bietet einen neuen Ansatz für die semantische Suche nach Diensten.

Die Forderung nach einem allgemeinen P2P-System mit großem Anwendungsspektrum impliziert, dass die spezifische Semantik einer Anwendung nicht in vollem Umfang ausgedrückt werden kann. Ein Ausweg besteht darin, die Randbedingung eines konstanten Modellumfangs durch einen skalierbaren Modellumfang zu ersetzen. Es wird eine offene Modellarchitektur mit einem abstrakten, allgemeinen Basis-Systemmodell vorgeschlagen, das um speziellere Anwendungskonzepte erweitert werden kann, um die semantische Lücke zu schließen. Das Trennen von Basismodell und Anwendungsmodellen führt zur Separation der anwendungsspezifischen Semantik von den zugrundeliegenden allgemeinen Modellierungsmustern (Schemata) und ist Grundlage für das Realisieren der anwendungs-unabhängigen Basisfunktionen und -dienste - und damit für die Interoperabilität von verschiedenen Anwendungen. Darüber hinaus besitzt diese Vorgehensweise den Vorteil, dass ein Softwareentwickler, der über das Basismodell verfügt, die Lösung grundlegender Basisprobleme nicht mehr selber ausformulieren muss und sich statt dessen auf die Lösung der Probleme der Anwendungsdomäne konzentrieren kann. Die Spezifikation der Semantik erfolgt z. B. in so genannten XML Schemata getrennt von den eigentlichen Dokumenten, in denen eine semantische Auszeichnung mit Hilfe der definierten Tags erfolgt.

Beim Architekturentwurf muss zudem ein Kompromiss geschlossen werden zwischen der Flexibilität der Laufzeitrepräsentation einer Softwareanwendung und ihrer Performance. Eine flexible Repräsentation impliziert ein komplexes System mit hoher Veränderlichkeit, insbesondere auch der Struktur (Strukturvarianz). Ein solches System besitzt eine hohe Konnektivität (viele explizite innere Beziehungen und Beziehungstypen) und eine hohe Varietät (viele Systemkomponenten und Komponententypen). Eine Komponente ist ein bezüglich Struktur und Verhalten vollständig spezifiziertes Softwaremodul, bei dem die Funktionalität abgeschlossen beschrieben wird und nur über vorgegebene Schnittstellen manipuliert werden kann. Besteht ein System aus vielen feingranularen Komponenten, so kann es zur Laufzeit extrem flexibel verändert werden. Zum einen führt die große Anzahl expliziter Beziehungen zu einem erhöhten Kommunikationsaufwand zwischen den vielen Komponenten. Der entstehende Overhead geht zu Lasten der Performance. Zum anderen beeinträchtigt aber auch die Realisierung der in den Modellierungskonstrukten enthaltenen Abstraktionsmechanismen die Performance. Wird das gleiche System durch wenige, grobgranulare Komponenten repräsentiert, so wird die Realisierung effizienter. Durch Verschmelzen vieler feingranularer Komponenten zu wenigen grobgranularen, untrennbaren konkreten Komponenten können Optimierungspotentiale ausgeschöpft werden.

Prinzipiell ist die Vorgehensweise beim Software-Engineering in der Prozessleittechnik (beziehungsweise in der Automatisierungstechnik) mit der Vorgehensweise im allgemeinen Software-Engineering vergleichbar. Die Randbedingungen für den Einsatz von Software in der Prozessleittechnik weichen allerdings zum Teil erheblich von den Randbedingungen in anderen Anwendungsdomänen ab:
- Die Softwareanwendungen entstehen nicht allein beim Hersteller, sondern werden zu einem erheblichen Teil beim Anwender erstellt und an seine Bedürfnisse angepasst.
- Sie weisen zum Teil sehr hohe Standzeiten auf und werden während dieser Zeit immer wieder auf veränderte Anforderungen hin optimiert, ergänzt oder ersetzt.
- Sie müssen mit einer Vielzahl fremder Anwendungen zusammenarbeiten (im einfachsten Fall Aktualdaten und Meldungen austauschen).
- Sie müssen eine hohe Unabhängigkeit von der Rechnerplattform aufweisen, da im Laufe der Zeit fast zwangsläufig eine heterogene Hardwarelandschaft entsteht.

Insbesondere die beiden erstgenannten Randbedingungen haben dazu geführt, dass sich in der Prozessleittechnik schon frühzeitig bestimmte Techniken entwickelt haben, die maßgeblichen Einfluss auf die Vorgehensweise beim Software-Engineering haben:
- Softwareanwendungen werden beim Anwender weitestgehend durch Verschalten von vorgefertigten Komponenten (z. B. Funktionsbausteinen) aus einer Bausteinbibliothek erstellt und an seine Bedürfnisse angepasst. Das Ziel dabei ist es, den Anwender von der Notwendigkeit zur (textuellen) Programmierung zu entbinden, zumindest bei der Lösung von Routineaufgaben.
- Es wurden Möglichkeiten geschaffen, die es erlauben, Änderungen an der Software (Umprojektierungen) im laufenden Betrieb vorzunehmen (beispielsweise das Instanziieren von Bausteintypen bei einem PLS oder der inkrementelle "Delta-Download" bei der SPS). Damit müssen Projektierung und Betrieb nicht mehr streng sequentiell ablaufen.

In der Prozessleittechnik wurden in diesem Zusammenhang einige Begriffe für bestimmte Tätigkeiten geprägt. So spricht man vom "Projektieren" oder "Konfigurieren" in Abgrenzung zur Tätigkeit des Programmierens. Während das Programmieren nach DIN 19226 Teil 5 die "Tätigkeiten des Entwerfens, Codierens und Testens eines Programms" und damit in der Regel das Editieren von (textuellem) Quellcode umfasst, wird unter dem Projektieren oder Konfigurieren das ingenieurmäßige Vorgehen verstanden, ein komplexes Programm aus einfacheren, bereits bestehenden und getesteten Komponenten zu "konstruieren", ohne Quellcode editieren zu müssen. Das Projektieren beziehungsweise Konfigurieren umfasst seinerseits die Tätigkeiten des Strukturierens und des Parametrierens. Beim Strukturieren wird die Struktur der Anwendung (das heißt die Zahl der Softwarekomponenten und ihrer Beziehungen) verändert, indem Komponenten neu zur Anwendung hinzugefügt, miteinander verschaltet oder wieder gelöscht werden. Beim Parametrieren werden den Variablen der Komponenten Werte zugewiesen, die das Verhalten der Komponenten und damit des Gesamtsystems beeinflussen. Die Komponentenstruktur bleibt dabei jedoch unverändert.

Vereinfachend kann davon ausgegangen werden, dass sich der Lebenszyklus von Softwareanwendungen in der Prozessleittechnik in die drei Phasen
- Modellieren und Programmieren von Komponenten (Analyse, Design und Implementierung),
- Projektieren des Anwendungssystems aus Komponenten (Systemkonstruktion) und
- operatives Betreiben der Anwendung
unterteilen lässt, wobei die zweite und dritte Phase zeitgleich ablaufen können.

Die Modelle zu realisierender prozessleittechnischer Anwendungen enthalten in der Regel grundlegende Elemente der Objektorientierung. Berücksichtigt man zudem die bereits erwähnten Engineeringphasen in der Prozessleittechnik, so erscheint der Ansatz vorteilhaft, die für die Funktionalität des P2P-Systems erforderlichen Objekte in der Realisierung durch zur Laufzeit projektierte Softwarekomponenten zu repräsentieren.

Da bei der Komposition des Anwendungssystems aufbauorientierte Aspekte im Vordergrund stehen und es zur Laufzeit flexibel veränderbar sein soll, muss es sich bei dem P2P-System zwangsläufig um eine "White Box" handeln, deren innere Struktur durch die Systemschnittstelle transparent sichtbar ist (identifizierbare Objekte und Beziehungen). Im Gegensatz dazu ist der interne Aufbau (beziehungsweise die innere Struktur) der einzelnen Komponenten nach dem "Black Box"-Prinzip zur Laufzeit uninteressant. Er ist nur bei der Implementierung der jeweiligen Komponente auf der Ebene der Programmierung durch eine Programmiersprache, möglicherweise C, C++ oder Java von Bedeutung. Bei der Implementierung einer Komponente wird auch sein Verhalten festgelegt. Das Verhalten (beziehungsweise die Funktionalität) des Anwendungssystems hingegen ergibt sich im Sinne von "ein System ist mehr als die Summe seiner Elemente" implizit aus dem Verhalten der einzelnen Komponenten sowie aus ihren Beziehungen.

In den Anfängen der Programmierung waren Großrechner sehr komplex und teuer - und mit ihnen auch die Programme, die auf diesen Rechnern liefen. Als die Systeme älter wurden, war es aus Kostengründen nicht möglich, diese zu ersetzen, so dass Programmierer schrittweise die Funktionalität vergrößerten, indem sie neuen Code hinzufügten. Die Programme und ihre Systeme wurden komplexer und immer undurchdringlicher.

Die objektorientierte Programmierung entstand als Antwort auf die Probleme, die aus dieser immer weiter steigendenden Komplexität der "legacy"-Systeme resultierte. Modularität und Wiederverwendbarkeit schienen die Lösung für die Probleme der "legacy"-Systeme zu sein. Remote procedure call (RPC)-Architekturen entstanden, um die Probleme, die bei der Kommunikation zwischen Komponenten auf verschiedenen Rechnern auftraten, in den Griff zu bekommen. Die zwei erfolgreichsten RPC-Architekturen, DCOM und CORBA, fanden zwar weite Verbreitung, sie waren jedoch immer noch viel zu komplex, um eine komfortable Interoperabilität zwischen verschiedenen Systemen zu gewährleisten. Um eine verteilte Architektur zu konzipieren, die in einer heterogenen Rechnerlandschaft und einem sehr großen Netzwerk wie dem Internet mit möglichst wenig Engineering-Aufwand betrieben werden kann, benötigt man eine einfache, plattformneutrale Möglichkeit der Kommunikation zwischen Anwendungen.

Es ist möglich, leistungsfähige Systeme aus einfachen Komponenten (siehe Web Services) zusammenzusetzen, die in einem entsprechenden Rahmenwerk intelligent genug sind, sich selbst zu organisieren. Dieses Rahmenwerk bietet eine diensteorientierte Architektur (DOA). Diensteorientiert bedeutet, dass solch eine Architektur die Dynamik, die Selbstbeschreibung, die Veröffentlichung, Entdeckung und den Gebrauch von Diensten unterstützt. Ein Dienst ist eine abgeschlossene (Programm-)Einheit, die eine spezielle Funktionalität anbietet. Diese Funktionalität kann über eine eindeutige Schnittstelle angesprochen werden. Die Funktionalität ist die Fähigkeit einer Ressource zur Umsetzung einer von ihr geforderten Funktion zur Lösung einer speziellen Aufgabe.

Konzeptionell besteht das DOA-Modell aus drei Rollen, die drei grundlegende Interaktionen durchführen. Die Komponenten der DOA sind die Dienste, die prinzipiell aus zwei Teilen bestehen:

Zum Einen der Implementierung eines Dienstes. Ein Dienst kann beliebig groß sein und in einer beliebigen Sprache programmiert sein. Die zentrale Anforderung ist hier, dass der Dienst auf einer über das Netzwerk erreichbaren Plattform läuft, die vom Dienste-Provider bereitgestellt wird. Prinzipiell existieren zwei Möglichkeiten für die Implementierung eines Dienstes: Entweder den Dienst und die dazugehörige Schnittstelle von Grund auf neu zu entwickeln oder einen Dienstwrapper für eine bereits existierende Anwendung und die dazugehörige Schnittstelle zu entwickeln.

Zum Anderen die Dienstebeschreibung, die Schnittstelle eines Dienstes. Sie wird z. B. in XML (Extensible Markup Language) beschrieben und ist einem oder mehreren Standards unterworfen. Zu dieser Beschreibung gehören die Datentypen, Operationen, Protokollbindungen und Orte im Netzwerk (URL usw.), die die Implementierung des Dienstes haben. Zusätzliche Metainformationen, wie Kategorisierungen oder Quality-of-Service (QoS)-Angaben, erleichtern das Auffinden bei einer zielgerichteten Suche.

Kurz gefasst sind Dienste innerhalb einer solchen Architektur lose gekoppelte, erkundbare Komponenten, die über XMLbasierte Schnittstellen kommunizieren. Die einzelnen Eigenschaften sind dabei wie folgt definiert:
- lose gekoppelt: Die Dienste und die sie aufrufenden Programme sind unabhängig voneinander austauschbar.
- Erkundbar: Die Beschreibung des Verhaltens, der Ein-/Ausgangsparameter, sowie des Bindemechanismus sind öffentlich verfügbar.
- Komponente: Die Implementierung eines Peer-Dienstes ist gekapselt, die Funktionalität ist nur über die Schnittstellenbeschreibung erkundbar.
- XML-basiert: Für Menschen lesbares, textbasiertes Format und somit selbstbeschreibend, was die Voraussetzung für ein plattformunabhängiges Protokoll ist.

Wie bereits erwähnt, basiert die DOA auf den Interaktionen zwischen drei Rollen: Einem Anbieter, einem Broker (Registrierungsstelle) und einem Nutzer. Zu den Interaktionen zwischen diesen Rollen gehören das Veröffentlichen von Informationen über einen Dienst, das Herausfinden, welche Dienste zur Verfügung stehen, und das Verbinden mit diesen Diensten. In einem typischen Szenario bietet ein Anbieter die Implementation eines Dienstes an. Die Anbieter definieren Dienstebeschreibungen der enthaltenen Dienste und veröffentlichen sie in einer Registrierungsstelle. Ein Nutzer verwendet dann die Registrierungsstelle, um Dienstebeschreibungen für die Dienste zu finden, an denen er interessiert ist. Anhand der Dienstebeschreibung verbindet sich der Nutzer dann mit einem Dienst und ruft diesen auf. Eine diensteorientierte Architektur stellt ein mächtiges Rahmenwerk zur Entwicklung von modularen Anwendungen zur Verfügung. Jedoch ist für manche Anwendungsfälle die zentralisierte Struktur der DOA zu unflexibel.

Eine diensteorientierte Architektur in einer dezentralisierten, selbstorganisierenden Umgebung bietet der P2P-Ansatz. Der P2P-Ansatz unterscheidet sich von der DOA darin, dass nicht versucht wird, explizite Rollen zu definieren. Jeder Knoten oder Peer kann jede Rolle übernehmen, die er kennt oder über andere Peers im P2P-Netzwerk erlernen kann. Es existiert keine klare Abgrenzung zwischen Anbietern, Nutzern und Vermittlern. Dies ist der wesentliche Unterschied zwischen der "Web Services"- und der P2P-Architektur. Während das "Web Services"-Modell immer noch einer traditionellen Architektur mit zentralen Servern folgt, handelt es sich bei P2P um ein völlig dezentrales System, in dem die Verantwortlichkeiten auf die Peers verteilt sind.

Neben der Notwendigkeit nach einem dezentralisierten, selbstorganisierenden Systems, die sich aus den Randbedingungen des Anwendungsfalls ergibt, sind auch die technischen Vorteile des Peer-to-Peer-Modells deutlich zu erkennen: Dies sind eine effizientere Verwendung der Netzwerkbandbreite und eine höhere Verfügbarkeit. Die konzentrierten, lokalen Verkehrsstaus, die z. B. im heutigen Internet so typisch sind, treffen auf P2P nicht zu. Es existieren keine dezidierten Server. Alle Interaktionen finden zwischen einzelnen Peers statt, so dass es keine zentralisierten Flaschenhälse gibt. Wenn es bei einem Peer zu einem Hardware-Ausfall kommt, kann ein anderer Peer aus dem Netzwerk die Anfrage bearbeiten. Wenn ein Peer überlastet ist, wird er die Anfrage zu langsam beantworten und ein anderer Peer wird für ihn einspringen.

Unter dem Begriff Semantik versteht man in diesem Zusammenhang die Bedeutung von Wörtern, die bei der Beschreibung von Diensten und ihren Parametern verwendet werden. Semantiken waren immer ein heikler Punkt in verteilten Systemen. Solange die Systeme relativ klein und überschaubar sind, bieten objektorientierte Ansätze eine gute Möglichkeit, dieses Problem in den Griff zu bekommen. Die Namenskonventionen für Methoden und ihre Parameter deuten dem Entwickler in der Regel an, welche Bedeutung sie haben. In einem großen System kann die Semantik einer Klasse bzw. eines Dienstes in der Regel nicht durch ihre Schnittstelle allein eindeutig hergeleitet werden. Das Problem wird sogar noch größer, wenn mehrere Unternehmen an einem verteilten System teilnehmen. Der steigende Einsatz von XML brachte für diese Verständnisfragen wenig Hilfe wegen seiner ihm eigenen Erweiterbarkeit. Aufgrund der Tatsache, dass die Bedeutung von XML Tags in XML Schemata spezifiziert wurden, entwarf jeder Entwickler seinen eigenen Satz von Definitionen, was zu einer "Turm von Babel"-Situation führte.

Bekannt ist der Versuch der Einbindung von Ontologien, dem menschlichen Kontext, der in XML-basierten Ansätzen fehlt, in XML Schemata. Eine Ontologie ist eine Vereinbarung einer Gemeinschaft mit gleichen Interessen über die semantische Bedeutung von Begriffen. Sie besteht üblicherweise aus Aussagen der Form "Subjekt Prädikat Objekt", wobei das Objekt einer Aussage wiederum Subjekt einer weiteren Aussage sein kann. Grafisch lässt sich dies in Form von Graphen mit gerichteten, benannten Kanten darstellen. Zu bemerken ist hierbei, dass eine Ontologie nicht zwingend eine objektorientierte Klassenhierarchie beinhalten muss. Ein einfacherer Ansatz ist die Verwendung von Taxonomien für die Klassifikation von Diensten. Darunter versteht man eine hierarchische Klassifikation von Dingen nach Prinzipien der objektorientierten Modellierung. Die grafische Repräsentation besitzt die Form eines Baumes. Hier ist die Semantik nur implizit vorhanden und auch nur für den Menschen verständlich.

Weder die Ontologie noch die Taxonomie in ihrer Grundform eignen sich jedoch für ein großes, verteiltes und dezentral organisiertes Dienstesystem. Ein Ontologie ist viel zu komplex und eine Taxonomie allein reicht nicht aus bei einer zielgerichteten Suche nach Diensten. Die hier vorgeschlagene Lösung vermeidet die genannten Nachteile. Neben der Existenz einer Dienstetaxonomie ist auch eine so genannte "Distanzfunktion" vorteilhaft, die die Beziehung zweier Dienste durch Angabe eines arithmetischen Wertes eindeutig festlegt. Im Folgenden wird auf diese Distanzfunktion und die dazugehörigen Suchgruppen näher eingegangen. Die Distanzfunktion wird verwendet bei der Autokonfiguration des Netzwerks (von der Steuereinheit) und bei der Tiefensuche (von den Suchdiensten). Sie liefert eine künstlich spezifizierte "Nähe" zwischen zwei Peers zurück. Diese Definition der Nähe ist innerhalb des gesamten Suchnetzwerkes eindeutig. Basierend auf dieser Näheberechnung werden Peernachbarschaften gebildet.

Ein Suchnetzwerk wird von Peers gebildet, die allesamt Mitglieder einer bestimmten semantischen Gruppe sind. Die Peers sind Knoten dieses Netzwerks. Die Kanten dieses Netzwerks führen zu den Peernachbarn. Ein Peer kann Knoten in mehreren Suchnetzwerken sein. Jede Mitgliedschaft zu einer semantischen Gruppe bedeutet zugleich Knoten in dem dazugehörigen Suchnetzwerk.

Es wurden klare Anforderungen an Modellierungskonzepte und ihre softwaretechnische Umsetzung formuliert. Auf dieser Basis wird nun der eigentliche Entwurf des P2P-Systems beschrieben. Dazu wird zunächst die grundlegende Systemstruktur des P2P-Systems erläutert, d. h. die Basiskomponenten und - dienste, sowie deren Schnittstellen. Im Anschluss folgt die Beschreibung des Modellentwurfs für die Komponenten, deren Aufgabe die Bildung eines P2P-Overlay-Netzwerkes nach semantischen Kriterien ist. Diese Komponenten werden im folgenden als "semantische Gruppe" oder "Suchgruppe" bezeichnet. Eine semantische Gruppe ist also ein inhaltlich zusammengehörender Verbund von Peers, welche das gleiche Verständnis von einer bestimmten, endlichen Anzahl von Diensten besitzen. Dieses Verständnis kann ein Peer zur Laufzeit lernen. Zudem wird anhand des Ausführungsbeispiels auf Aspekte der konkreten Realisierung eingegangen.

Das in Figur 3 dargestellte Ebenenmodell beschreibt eine mehrschichtige Architektur für ein dezentrales, selbstorganisierendes Informationssystem. Dieses generische Ebenenmodell erlaubt, dass sich Peers 71, 72 gleichzeitig auf verschiedenen Ebenen bewegen können. Die zu jeder Ebene gehörende Suchstrategie basiert auf einer Ordnungsstruktur 75, 76, 77 der Peers 71, 72, die prinzipiell unabhängig ist von der räumlichen oder netztopologischen Anordnung der Peers 71, 72. Z. B. aus Optimierungsgründen kann sie aber auch davon abhängig gemacht werden, insbesondere dann, wenn die gewünschte Information mehrfach "identisch" (Identität bezogen auf die jeweilige Semantik der Ordnungsstruktur 75, 76, 77) bei mehreren Peers 71, 72 existiert, z. B. bei einer Suche nach dem "nächstgelegenen" Meldeserver. Eine Ebenenbildung unter den Ordnungsstrukturen 75, 76, 77 ist nicht zwingend, d. h. eine Ordnungsstruktur 75, 76, 77 überlagert a priori nicht eine andere. Verschiedene semantische Ordnungsstrukturen 75, 76, 77 bauen nicht hierarchisch aufeinander auf, sondern stehen parallel zueinander und nutzen nur gemeinsam die Infrastruktur 73 des P2P-Netzwerks. Es existieren üblicherweise gleichzeitig mehrere unterschiedliche Ordnungsstrukturen 75, 76, 77, so dass prinzipiell auch mehrere Suchstrategien parallel vorhanden sind, die auch bei einer Suche verbunden werden können.

Das Besondere an diesen Ordnungsstrukturen 75, 76, 77 gegenüber Suchkriterien in heutigen P2P-Netzwerken besteht darin, dass sowohl die Such- als auch die Optimierungskriterien der Suche an der gemeinsamen Aufgabenstellung bzw. Dienstschnittstelle der Mitglieder einer Suchgruppe orientiert ist. Erst dadurch wird es möglich, die Suchalgorithmen nach dem Inhalt der Suchabfrage zu optimieren und nicht unabhängig von der Suchanfrage den gleichen Algorithmus zu verwenden. Die Definition einer Ordnungsstruktur 75, 76, 77 ist in Peers 71, 72 nachladbar, auch im laufenden Betrieb. Damit ist es möglich, dynamisch neue Suchstrategien, aber auch neue Funktionalität in das System einzubringen.

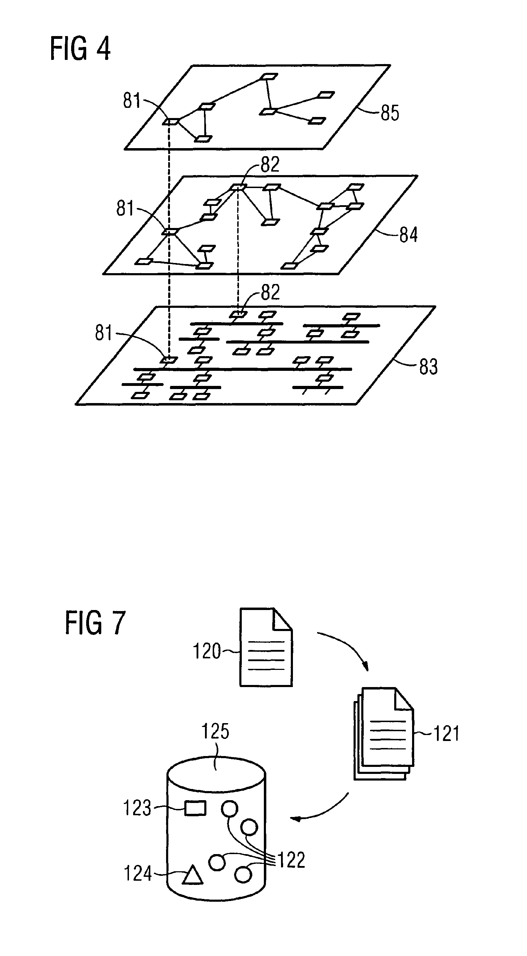

Im Modell gemäß Figur 4 ist jede Ebene durch eine additive Peergruppenzugehörigkeit gekennzeichnet, d. h. ein Peer 81, 82, der sich auf einer bestimmten Ebene bewegt, ist nicht nur Mitglied der dazu gehörigen Peergruppe, sondern auch Mitglied in allen Peergruppen der darunterliegenden Ebenen. Durch Hinzugewinn einer neuen Peergruppenzugehörigkeit gewinnt ein Peer 81, 82 also eine neue, semantisch höherliegende Ebene dazu und muss zusätzlich für diese Ebene neue Nachbarschaftsbeziehungen eingehen, basierend auf dem Organisationsschema der jeweiligen Ebene. Verliert ein Peer 81, 82 eine Gruppenzugehörigkeit, so verliert er nur die Nachbarschaften in der entsprechenden Ebene. Dadurch, dass ein Peer 81, 82 in jeder Ebene andere Nachbarschaften eingeht, können auf jeder Ebene optimale Netzwerktopologien für die entsprechenden (verschiedensten) Anforderungen gewährleistet werden. Ein notwendiges Kriterium für die Effektivität dieser virtuellen Suchnetzwerke 85 ist, dass diese zusammenhängend sein müssen. Dies ist Aufgabe der Organisationsstrategie. Die Wahl der Selbstorganisationsstrategien für die jeweiligen Ebenen sind nicht Bestandteil des Ebenenmodells, da diese vom Anwendungsgebiet abhängen. Für jede Ebene ist nur die Schnittstelle der semantischen Gruppe eindeutig definiert. Die Realisation der Dienste der semantischen Gruppen wird von der jeweiligen Ebene gekapselt. Die Basisdienste hingegen sind eindeutig festgelegt. Mit dem Bereitstellen der Basisdienste bildet sich bereits das erste Suchnetzwerk 84 "generic" aus. Sämtliche Peers 81, 82 sind Mitglieder dieser Suchgruppe. Die unterste Ebene ist das tatsächliche physikalische Netzwerk 83 mit den Peers 81, 82.

Nicht jeder Peer 81, 82 muss in allen Ordnungsstrukturen enthalten sein. Die durch die Ordnungsstrukturen definierten Peermengen (die so genannten "semantischen Gruppen") sind daher in der Regel nicht kongruent. Die Mitglieder einer semantischen Gruppe sind in der Regel vor einem Suchvorgang den betreffenden Peers 81, 82, insbesondere dem Peer, der den Suchvorgang startet, nur partiell bekannt (begrenzte Nachbarschaften). Andererseits können von einem Peer 81, 82 aus dennoch prinzipiell alle Peers 81, 82 einer semantischen Gruppe erreicht werden. Durch die zwei letztgenannten Eigenschaften passt sich das System an Veränderungen des Systems z. B. durch teilweisen Ausfall eines Teilnetzes oder Hinzufügen bzw. Entfernen von Peers 81, 82 selbsttätig an.

Zwischen den Peers 81, 82 in einer semantischen Gruppe, die voneinander wissen, bestehen bilaterale Beziehungen. Die Rollen in diesen Beziehungen werden zur Navigation während des Suchvorgangs verwendet. Die Rollen können den Beziehungen Richtungen aufprägen, z. B. "übergeordneter" bzw. "untergeordneter" Peer, um eine Hierarchie zwischen Peers zu modellieren. Ein Suchvorgang innerhalb einer semantischen Gruppe nutzt die o.g. Beziehungen zur Navigation, wobei der Suchraum dynamisch aufgebaut wird, da jeder während der Navigation gefundene Peer nur eine beschränkte Sicht auf seine Nachbarschaft hat. Die Navigation wird dabei durch die Rollen unterstützt. Ein Distanzmaß, das für jeden während der Navigation gefundenen Peer errechnet wird, beschleunigt den Suchvorgang. Für die Größe "Distanz" sind prinzipiell alle Skalen erlaubt, die eine "größer"-, "kleiner"-, "gleich"-Aussage ermöglichen. In diesem Zusammenhang ist mit Skala ein Vergleichsmaßstab gemeint, mit dem der Wert einer Größe verknüpft werden kann. Je nach definiertem Wertebereich und zulässigen Verknüpfungen unterscheidet man hierbei verschiedene Skalentypen. Zu den metrischen Skalen zählen die Verhältnis- und die Intervallskala. Die nicht-metrischen Skalen unterteilen sich in eine Ordinal- und eine Nominalskala. Bei Distanzen mit ordinaler Skalierung sind die Elemente der Wertemenge in einer eindeutigen Rangfolge nach entsprechenden Regeln geordnet. Diese eindeutige Rangfolge liefert bei paarweisem Vergleich der Ausprägungen zusätzlich zu den Ergebnissen im Fall nominaler Skalierung ein Ergebnis in Form von Aussagen der Art "größer" oder "kleiner".

Im Folgenden ist der Ablauf des Suchverfahrens schrittweise beschrieben. In einem ersten Schritt wird eine Suchanfrage generiert. Dabei kann in einem beliebigen Peer eine Suchanfrage generiert werden kann. Im zweiten Schritt sucht der Peer, der die Anfrage erhalten hat, in seinen Gruppenentitäten nach dem gesuchten Objekt. Die Gruppenentität ist eine zur Laufzeit ladbare Komponente, bestehend aus Steuereinheit, Distanzfunktion und Diensten, welche die Mitgliedschaft eines Peers innerhalb einer semantischen Gruppe realisiert. Befindet sich das Objekt in einer dieser Gruppenentitäten, so ist die Suche beendet. Die Suche ist auch dann beendet, wenn sich das Zielobjekt nicht in einer Gruppenentität des aktuellen Peers befindet, eine vorgegebene, maximale Anzahl der Suchschritte jedoch erreicht ist. Andernfalls wird unter Verwendung des Distanzmaßes diejenige Gruppenentität und somit auch der Peer (als Verwalter der Gruppenentität) bestimmt, an den die Anfrage weitergeleitet wird. Dazu berechnet der Peer mit Hilfe der Distanzfunktion für jeden Nachbarpeer Pᵢ (i ist Element von {1,...,n}) die minimale Distanz dist_{i,min} zwischen dem Zielobjekt und allen ihm bekannten Objekten des jeweiligen Nachbarn. Die Suchanfrage wird an denjenigen Nachbarpeer Pₖ weitergeleitet, der die kleinste, minimale Distanz zum Zielobjekt besitzt (dist_{k,min} < dist_{i,min}). Die Suchanfrage enthält stets die vollständige Information über den bisherigen Suchpfad und wird von einem Peer zum nächsten weitergegeben. Endet eine Suche erfolgreich, so wird in einem dritten Schritt eine positive Antwort direkt an den Peer zurückgeschickt, der die Anfrage initiiert hat. Diese Nachricht enthält die Adressdaten des gefundenen Ziels und die Identifikation der Suchanfrage. War eine Suche erfolglos, so wird eine negative Nachricht direkt an den Peer zurückgeschickt, der die Anfrage initiiert hat. Diese Nachricht enthält die Adressdaten des letzten besuchten Knotens, die Abbruchursache und die Identifikation der Suchanfrage. Mit diesem Grundverfahren wird das Ziel deterministisch erreicht. Erhält der Peer, der die Anfrage initiiert hat, jedoch innerhalb einer vorgegebenen Toleranzzeit keine Antwort, verwirft er die Anfrage und generiert gegebenenfalls eine neue Anfrage. Trifft die Antwort später ein, kann sie nicht mehr zugeordnet werden und wird verworfen.

Die Treffermenge einer Suche kann mehr als einen Peer umfassen. Gegebenenfalls kann die Treffermenge eingeschränkt werden, indem auf eine andere semantische Gruppe umgeschaltet wird und in dieser Gruppe z. B. die Distanzmaße für die Peers in der Treffergruppe errechnet werden. Um sicherzustellen, dass die Treffermenge alle Peers der semantischen Gruppe enthält, die dem Suchkriterium entsprechen, muss die transitive Hülle aller via Navigation von einem Peer aus erreichbaren Peers identisch mit der semantischen Gruppe sein. Dies wird sichergestellt, indem beim Einfügen eines Peers in das System bzw. beim Entdecken inzwischen ungültiger Beziehungen ein geeignetes "Kennenlern-Verfahren" (z. B. via Broadcast) bzw. beim Entfernen eine geeignetes "Verabschiedungsverfahren" durchgeführt wird.

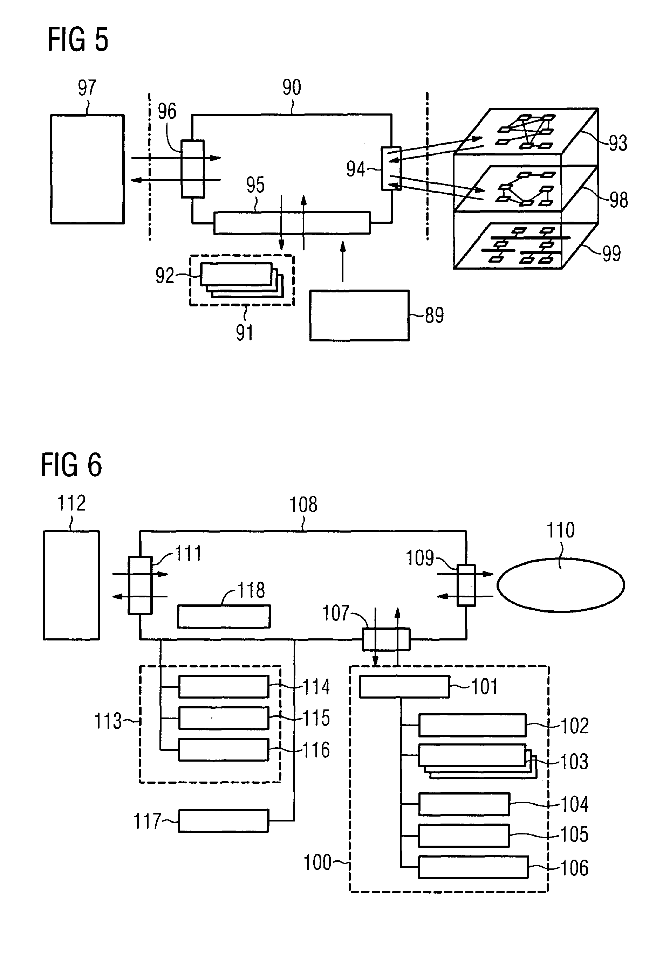

Die modulare Natur des Ebenenmodells findet ihre Entsprechung in der Zusammensetzung des Gesamtsystems durch Objektkomponenten gemäß Figur 5 mit eindeutig spezifizierten Schnittstellen 94, 95, 96. Für die Bildung eines semantischen Overlay-Netzwerks wird folgende Vorgehensweise vorgeschlagen: Zuerst wird in einen Peer 90 eine gewisse Basisfunktionalität 91 geladen, bestehend aus einer endlichen Menge von Basisdiensten 92. Damit ist ein Peer 90 vollständig in der Lage, Overlay-Netzwerke 93 beliebiger Struktur zu bilden. Die Ausprägung eines Netzwerks 93 nach bestimmten Kriterien ist jedoch nicht Bestandteil der Basisfunktionalität 91 eines Peers 90.

Erst das Laden einer so genannten Gruppenentität 89 ermöglicht es, ein Overlay-Netzwerk 93 nach semantischen Kriterien zu bilden. Da die Overlay-Netzwerke 93 ausschließlich für die Suche nach Informationen bzw. Diensten verwendet werden, werden diese Overlay-Netzwerke 93 auch Suchnetzwerke genannt. Unterhalb der Overlay-Netzwerke 93 liegt das generische Peernetzwerk 98 und das physikalische Netzwerk 99. Der Peer 90 weist außerdem eine Schnittstelle 96 zu einer Bedienerschnittstelle 97, z. B. einem automatisiertem Klienten, auf.

Solch eine Gruppenentität besteht aus einer Steuereinheit, die Kenntnis über eine bestimmte Menge von Anwendungsdiensten und deren Verhältnis zueinander besitzt (zur Berechnung einer für die Tiefensuche notwendigen Distanz zum Ziel), generischen Diensten, die jede semantische Gruppe besitzt und den Anwendungsdiensten selbst. Es können beliebig viele Gruppenentitäten in einen Peer geladen werden. Je nachdem, ob sie auf den Diensten anderer Gruppenentitäten aufbauen oder nicht, liegen sie bildlich gesprochen über oder neben einem bereits bestehenden Suchnetzwerk. Die Steuereinheit ist eine Funktionseinheit, die einen Algorithmus bzw. Zustandsautomaten zur Verhaltenssteuerung eines Peers innerhalb einer semantischen Gruppe beinhaltet. Sie ist zuständig für die Reorganisation der Nachbarschaften ihres Peers bzgl. eines semantischen Netzwerks. Die Steuereinheit entscheidet unter Einsatz einer Distanzfunktion, die jede Gruppenentität besitzt, welche Peers als Nachbarn in Frage kommen und ruft die entsprechenden Dienste auf. Diesbezüglich verwaltet jede Steuereinheit die Nachbarnliste ihres Netzwerks.

Traditionelle, verteilte Systeme setzen voraus, dass eine gemeinsame Umgebung bzw. Architektur zwischen kooperierenden Einheiten existiert. Wenn zwei Einheiten versuchen, mittels J2EE, CORBA oder DCOM eine gemeinsame Aufgabe zu bewältigen, so existiert eine gemeinsame Architektur für das Aufrufen von Operationen oder das Teilen von Daten. Eine gemeinsame Architektur macht es zwar relativ einfach, Anwendungen miteinander zu verbinden, sie garantiert jedoch nicht unbedingt eine Interoperabilität. Die grundlegende Idee besteht nun darin, die Kommunikation zwischen den verschiedensten Objekten unter Benutzung des kleinsten gemeinsamen Nenners erfolgen zu lassen, nämlich ASCII-Zeichenketten. Die "Extensible Markup Language" (XML), die eine plattformunabhängige Möglichkeit bietet, Informationen zu spezifizieren, erscheint hierfür geeignet und bildet die Grundlage aller Peer-Dienste. Das "Simple Object Access Protocol" (SOAP) setzt auf XML auf und unterstützt den Austausch von Informationen in einer dezentralen, verteilten Umgebung. SOAP besteht aus einem Satz von Regeln für die Informationscodierung und einer Vorschrift für die Darstellung entfernter Methodenaufrufe (RPC = Remote Procedure Calls) und deren Antworten. Die "Web Services Description Language" (WSDL) spezifiziert die Diensteschnittstellen, d. h. welche Diensteparameter müssen übertragen werden und welche Informationen zurückgeliefert werden. SOAP und WSDL ermöglichen im Zusammenspiel eine plattform- und datenunabhängige Spezifikation und Verbreitung sowie die Nutzung von Diensten gemäß den Rollen in einer diensteorientierten Architektur. Mit diesen Protokollen können Anwendungen aus unterschiedlichen Bereichen und unterschiedlichen Plattformen zusammenarbeiten.

Das Aufsetzen von Peerdiensten auf XML hat den Nachteil der Größe der zu übertragenden Datenmenge. Der Einsatz von XML vergrößert die "Netto"-Datenmenge um ein Vielfaches bei der Übertragung und benötigt somit mehr Speicherressourcen und mehr Übertragungszeit. Die Flexibilität von SOAP(XML)-Nachrichten führt auch dazu, dass mehr Rechenzeit aufgebracht werden muss für das Formatieren und Parsen der Nachrichten. Der Einsatz von XML ist trotzdem vorteilhaft, da die von XML gebotene Flexibilität erforderlich ist, wenn man viele verschiedene Anwendungsdomänen mit einer Technologie abdecken will. Andererseits ist es nicht erforderlich, innerhalb eines einzelnen Systems XML Daten zu halten. Dort bieten sich geeignetere, proprietäre Darstellungsformate an. XML ist jedoch für den Informationsaustausch in einem heterogenen Umfeld das zur Zeit geeignetste Mittel der Wahl.

Im Folgenden werden für das weitere Verständnis die vier Technologien XML, XML Schema, SOAP, WSDL kurz vorgestellt.

Sämtliche Nachrichten, die Peers untereinander sowie die Komponenten innerhalb eines Peers versenden, sind XML-Nachrichten. Um die Struktur von Dokumenten zu beschreiben, verwendet XML so genannte Marken (engl.: tags), die die einzelnen Teile eines elektronischen Dokuments kennzeichnen und abgrenzen. Jedes dieser Teile wird als Element bezeichnet. Elemente können ineinander verschachtelt werden. Das oberste Element eines Dokuments ist das so genannte Wurzelelement und die vom Wurzelelement umschlossenen Elemente bezeichnet man als Kindelemente. Ein Kindelement kann somit weitere Kindelemente beinhalten. XML Elemente beginnen mit einem Start-tag und enden mit einem Ende-tag. Dabei wird jeder Tag-Bezeichner von eckigen Klammern (< ... >) umschlossen. Das Ende-tag besitzt den gleichen Bezeichner wie das dazugehörige Start-tag, ihm wird zur Unterscheidung nur ein "/"-Zeichen vorangestellt. So sieht z. B. ein level-Element wie folgt aus:
<level>23,34</level>

XML definiert nur eine kleine Menge an Syntaxregeln, wie z. B. dass ein Start-tag immer auch ein dazugehöriges Ende-tag besitzt. XML-Dokumente sind streng hierarchisch als Baum konzipiert.

XML Schema ist ein Ansatz zur Definition von Dokumenttypen und damit zur Spezifikation von XML-Sprachen. Mit der Erhebung von XML zum Industriestandard 1999 hatte sich zunächst die von der Standardized Generalized Markup Language (SGML) übernommene Document Type Definition (DTD) als Format zur Beschreibung konkreter XML-Sprachen etabliert. Doch mit der starken Verbreitung von XML in der Praxis machten sich zunehmend die Grenzen und Nachteile von DTD bemerkbar. Insbesondere die dokumentenzentrierte Sichtweise von DTD unter Vernachlässigung von Datentypen erweist sich in Zeiten der Annährung der Programmiersprachen an die Datenmodellierung als Problem. DTD lässt weder die Beschreibung bestimmter semantischer Bedingungen noch die Festlegung von Wertebereichen zu. Gerade die zunehmende Verbreitung verteilter und inhomogener Anwendungen erfordert jedoch eine Möglichkeit, Daten in einem einheitlichen, dabei aber flexiblen und leicht modifizierbaren Format, welches sich zudem leicht auswerten (parsen) lässt, zu transportieren. XML Schema bietet zahlreiche Datentypen an, zusammen mit der Möglichkeit, den Wertebereich explizit anzugeben. Mit diesen Basistypen können dann weitere, komplexe Elementtypen definiert werden. Diese einmalige Definition von Daten- oder Elementtypen bei u. U. häufiger Verwendung fördert zum einen die Lesbarkeit des Schemas als auch die spätere Verarbeitung durch einen Parser. XML Schema ermöglicht zudem die Definition neuer Elementtypen auf Basis vorangegangener Definitionen (Vererbung) und unterstützt so genannte Namensräume (namespaces). Durch die Berücksichtigung von Namensräumen lassen sich Dokumentinstanzen erstellen, die auf Elemente in verschiedenen XML Schema-Beschreibungen zugreifen. Elemente mit gleichen Namen aber unterschiedlicher Struktur können, sofern durch Namensräume getrennt, in derselben Dokumentinstanz erscheinen. XML Schemata werden im P2P-System zur Spezifikation der Peernachrichten verwendet.

SOAP ist ein unidirektionales, XML-basiertes Kommunikationsprotkoll für den Austausch von strukturierten und typisierten Informationen. Obwohl es unidirektional ist., können SOAP-Nachrichten kombiniert werden, so dass sie Request/Response-Interaktionen ermöglichen. Die in einer SOAP-Nachricht enthaltenen Informationen können sowohl Dokumente darstellen als auch entfernte Prozeduraufrufe (RPC), die bei einem Diensteanbieter bestimmte Methoden aufrufen. Der SOAP-Standard spezifiziert diesbezüglich drei Teile: Die Kodierund Ordnungsregeln, die RPC-Konventionen und die Envelope-Struktur. Jede SOAP-Nachricht besteht aus einer Envelope, die optional einen Header und danach zwingend erforderlich einen Body enthält. Der Header enthält Informationsblöcke, die sich darauf beziehen, wie die Nachricht verarbeitet werden soll. Dazu gehören Angaben zum Routing und zur Auslieferung, Aussagen über die Authentifizierung oder Autorisierung und Transaktionskontexte. Der Body enthält die eigentliche Nachricht, die ausgeliefert und verarbeitet werden soll. Alles, was in XML-Syntax ausgedrückt werden kann, kann im Body einer Nachricht stehen. Die Peernachrichten verwenden nur den SOAP-Body.

WSDL Dokumente beschreiben sowohl abstrakte als auch konkrete Details eines Dienstes. Der abstrakte Teil eines WSDL-Dokuments beschreibt Charakteristiken eines Dienstes, die vom Entwickler festgelegt sind und die implementierungsunabhängig sind. Der konkrete Teil des Dokuments beschreibt Aspekte, die vom Diensteanbieter festgelegt werden. Die Definition einer Schnittstelle in WSDL beginnt mit der Definition der Datentypen, die über die Schnittstelle ausgetauscht werden. Die "type"-Komponente deklariert den Namensraum und die Datentypen, die in den Nachrichten des Dienstes verwendet werden. Dies sind applikationsspezifische Datentypen. Bei Verwendung von SOAP als Nachrichtenformat, erscheinen die in der "message"-Komponente definierten Nachrichten im Body einer SOAP-Nachricht. Der Header wird an anderer Stelle im WSDL-Dokument definiert. Die Komponente "PortType" definiert die Operationen, die von einem logischen Endpunkt unterstützt werden und die zu den Operationen gehörenden gesendeten oder erhaltenen Nachrichten. Bis zu diesem Punkt sind noch keine implementierungsspezifischen Angaben gemacht. So ist das Übertragungsprotokoll, die Kodierung der Daten sowie die physikalische Adresse des Ports noch nicht spezifiziert. Diese werden von drei weiteren Komponenten angegeben. Ein Port ist ein Unterobjekt eines Dienstes. Eine Menge von Ports beschreibt die Schnittstelle eines Dienstes und dient der Hinterlegung von Daten, die mit der Umwelt des Dienstes ausgetauscht werden.

WSDL ist jedoch nicht zwingend an SOAP gekoppelt. Die mit WSDL beschriebene Schnittstelle kann auch mit anderen Protokollen implementiert werden. Es existieren sowohl HTTP- als auch SMTP-bindings. Der Einsatz von WSDL besitzt jedoch einen Nachteil. Da WSDL eine voneinander unabhängige Spezifizierung der einzelnen Komponenten erlaubt, existiert viel Redundanz in einem WSDL-Dokument. Diese Redundanz, in Verbindung mit dem Einsatz von XML, ist verantwortlich für die beträchtliche Größe eines WSDL-Dokuments, verglichen mit der Größe einer tatsächlichen SOAP-Nachricht, die sie definiert.

In Figur 6 ist die modulare Struktur eines Peers 108 für ein semantisches Suchnetzwerk dargestellt. Diese Form der Strukturierung ermöglicht die Erweiterung eines Peers 108 um weitere Dienste (genauer: Gruppenentitäten 100) zur Laufzeit. Alle Systemkomponenten sind im Sinne einer objektorientierten Modellierung Objekte innerhalb einer Objektverwaltungsplattform, die zugleich auch die Laufzeitumgebung darstellt. Wie in Figur 6 dargestellt, sind an den Peer 108 die Gruppenentitäten 100 und die für den Betrieb notwendigen Objekte für die Nachrichtenkonvertierung 113 zwischen textuellen SOAP(XML)-Nachrichten und Plattform-spezifischen Nachrichtenobjekten angekoppelt. Diese Objekte sind z. B. ein Klassengenerator 114, ein Serialisierer 115 und ein Deserialisierer 116. Die Basisdienste 102 bis 106, die zusammen mit ihrer Steuereinheit 101 eine besondere Gruppenentität 100 bilden, werden bei der Initialisierung des Peers 108 geladen, alle anderen Gruppenentitäten kann man im stationären Betrieb laden und auch wieder entfernen. Die interne Kommunikation zwischen Peer 108, Steuereinheit 101 und Diensten 102 bis 106 erfolgt gemäß Ausführungsbeispiel über SOAP(XML)-Nachrichtenaustausch 107. Dies gilt auch für die Kommunikation 109 zwischen Peers im Netzwerk 110. Zudem besitzt jeder Peer 108, unabhängig von der Existenz semantischer Gruppen 100, eine Peerliste 117, in der sämtliche Peers verwaltet werden, mit denen ein Peer 108 kommuniziert hat. Diese Liste 117 ist vor allem bei der Registrierung eines Peers 108 in einem neuen Suchnetzwerk bedeutend, da in diesem Fall ein Peer 108 immer einen anderen Peer, der bereits in dem Suchnetzwerk angemeldet ist, als "Zugangsknoten" kennen muss.

An den Peer 108 kann man beliebige grafische Schnittstellen bzw. Frontends sowie automatisierte Klienten 112 über eine Schnittstelle 111 ankoppeln. Die Frontends selbst müssen keine komplexen SOAP(XML)-Nachrichten generieren, sondern nur kurze Befehle mit entsprechenden Befehlsparametern an den Peer übergeben. Der peerinterne "SOAPBuilder" 118 generiert in diesem Falle daraus eine für den Peer verständliche SOAP(XML)-Nachricht. Als Klient 112 kann z. B. ein Webserver eingesetzt werden, der zur Webbrowser-Seite hin das weit verbreitete HTML (über TCP/IP) als Transportprotokoll verwendet, und zur Plattform-Server-Seite ein proprietäres Kommunikationsprotokoll.

Im Folgenden wird die Funktionalität der einzelnen Komponenten näher beschrieben. Der Peer 108 hat im stationären Betrieb die Funktionsweise eines Verteilers. Er analysiert, welche Nachrichten aus dem Netzwerk 110 an welche seiner Steuereinheiten 101 übergeben werden müssen und ist auch zuständig für die Zustellung einer Nachricht, die eine Steuereinheit 101 ins Netzwerk 110 schicken möchte. Die interne Verteilung von Nachrichten verläuft zweistufig: Der Peer 108 verteilt die Nachrichten an die entsprechenden Steuereinheiten 101 und die Steuereinheiten 101 wiederum verteilen die Nachrichten an die betreffenden Dienste 102 bis 106 zur Bearbeitung. Die Dienstobjekte 102 bis 106 allein sind zuständig für die Verarbeitung ankommender Nachrichten. Nur sie und die Steuereinheiten 101 können neue Nachrichten generieren. Der Peer 108 ist auch Vermittler beim Nachrichtenverkehr zwischen einem Klienten 112 und den entsprechenden Steuereinheiten 101 sowie beim internen Nachrichtenverkehr zwischen verschiedenen Diensten 102 bis 106. Zudem besitzt der Peer 108 die Funktionalität, im stationären Betrieb neue Gruppenentitäten 100 zu laden bzw. wieder zu entfernen. Mit dem Laden einer Gruppenentität 100 gewinnt ein Peer 108 eine neue Gruppenmitgliedschaft in einer semantischen Gruppe. Ein Peer 108 muss nicht zwingend alle Dienste 103, die einer semantischen Gruppe zugeordnet sind, selbst besitzen und im Netzwerk 110 anbieten. Allein das Wissen um die Existenz aller Dienste 102 dieser Gruppe, was softwaretechnisch mit dem Laden der Steuereinheit 101 einhergeht, reicht für eine Mitgliedschaft aus.

Jede Steuereinheit 101 einer Gruppenentität 100 besitzt ihren eigenen Zustandsautomaten und ist zuständig für die Reorganisation der Nachbarschaften ihres Peers 108 bzgl. seines semantischen Netzwerks. Die Steuereinheit 101 entscheidet unter Einsatz einer Distanzfunktion 104, die jede Gruppenentität 100 besitzt, welche Peers als Nachbarn in Frage kommen und ruft die entsprechenden Dienste auf. Diesbezüglich verwaltet jede Steuereinheit 101 die Nachbarnliste 105 seines Netzwerks.

Jeder Dienst 103 wird durch ein zugehöriges Dienstobjekt repräsentiert. Die Dienste 103 sind'im Ausführungsbeispiel in der WSDL-Sprache spezifiziert und ihre Schnittstellen können explizit vom Dienstobjekt erfragt werden. Alle Dienstobjekte besitzen eine XML-Schnittstelle, den so genannten Port. Das vollständige Schnittstellenmodell eines Dienstes, orientiert sich stark an der WSDL-Spezifikation und weist vier Übertragungsprimitive (Operationsarten) auf. Die Primitive ergeben sich aus der Anzahl und Abfolge der Nachrichten.

Die Basisdienste (inkl. Steuereinheit) werden bei der Initialisierung des Peers automatisch geladen. Damit ist jeder Peer automatisch Mitglied in mindestens einer semantischen Gruppe, der Basisgruppe "generic". Die Information, welche Dienste zu der Gruppe "generic" gehören, findet der Peer in einer entsprechenden, gleichnamigen XML-Datei. Für jede semantische Gruppe existiert eine solche Datei, in der die zugehörigen Dienste und konfigurierbaren Dienstparameter vermerkt sind.

Die Nachrichten, die Peers untereinander austauschen, sind Textnachrichten. Dies ermöglicht auch eine Kommunikation zwischen Peers, die sich eventuell auf ganz unterschiedlichen Plattformen befinden. Damit ein Dienst jedoch empfangene Nachrichten bearbeiten kann, müssen diese erst in ein plattformspezifisches Format, ein Nachrichtenobjekt, konvertiert werden. Der so genannte Klassengenerator 114 erzeugt aus der Dienstespezifikation, der WSDL-Datei, die auch die entsprechenden Datenstrukturen der Nachrichten beinhaltet, die dazugehörigen plattformspezifischen Nachrichtenklassen. Diese Nachrichtenklassen werden beim Laden eines Dienstes bzw. eines Dienstobjektes erzeugt. Der Peer 108 erfragt beim Dienst die Dienstespezifikation und übergibt diese an den Klassengenerator 114. Wenn ein Dienst eine neue Nachricht generiert, so instanziiert der Dienst die entsprechende Nachrichtenklasse, die der Klassengenerator 114 bereits beim Laden des Dienstes angelegt hat. Dann füllt er die entsprechenden Einträge aus und übergibt die Nachrichteninstanz an den Serialisierer 115, der daraus eine gültige SOAP(XML)-Nachricht generiert. Diese übergibt der Dienst dann an den Peer 108, der die Nachricht ins Netz 110 verschickt. Zudem legt der entsprechende Dienst die Nachricht, genauer das Nachrichtenobjekt, im Nachrichtenarchiv 106 ab. Jede Gruppenentität 100 besitzt ihr eigenes Archiv, in dem sämtliche gesendeten und empfangenen Nachrichten für eventuelle Netzwerkanalysen abgelegt werden. Der Deserialisierer 116 hat die genau entgegengesetzte Funktion zum Serialisierer 115. Er erhält vom Dienst eine XML-Nachricht und generiert eine neue Instanz der entsprechenden Nachrichtenklasse. Danach trägt er die Werte aus der XML-Nachricht in die Variablen der Instanz ein und übergibt diese an das Dienstobjekt. Der Dienst wertet daraufhin die Informationen aus der Nachrichteninstanz aus.

Ein Peer 108 kann klientenseitig sowohl SOAP-Nachrichten als auch proprietäre Kommandozeilen verarbeiten. Im letzteren Fall hat der SOAPBuilder 118 die Aufgabe, die erhaltenen Kommandozeilen in gültige SOAP-Nachrichten zu konvertieren. Um dies zu ermöglichen erfragt der SOAPBuilder 118 von jedem geladenen Dienst die entsprechende WSDL-Dienstespezifikation und generiert SOAP-Nachrichtentemplates, d. h. vorgefertigte Nachrichtenschablonen. Wenn der Peer nun von einem Klienten 112 ein Kommando erhält, so gibt er dieses an den SOAPBuilder 118 weiter. Dieser füllt die entsprechende Schablone mit Inhalt und übergibt eine vollständige SOAP-Nachricht an den Peer zurück. Der SOAPBuilder 118 dient auch der internen Kommunikation zwischen verschiedenen Diensten. Wenn ein Dienst einen anderen Dienst aufrufen will, so sendet er wie ein externer Klient das entsprechende Kommando an den SOAPBuilder 118. Dieser generiert die SOAP-Nachricht und übergibt sie an den Peer 108, der dann die Nachricht über die Steuereinheit 101 an den betreffenden Dienst weiterleitet.

Jede Gruppenentität 100 besitzt eine für sie spezifische Distanzfunktion 104, die basierend auf semantischen Kriterien den "nächsten" Peer zurückliefert. Bei einer Suchstrategie, die dem Prinzip einer Tiefensuche folgt, wird bei jedem Suchschritt von dem aktuellen Knoten im Suchnetzwerk diese Distanzfunktion 104 angestoßen, um zu erfahren, an welchen Knoten eine Suchanfrage eventuell weitergeleitet werden soll. Die Distanzfunktion 104 wird auch bei der Anmeldung im Netzwerk eingesetzt. Danach orientieren sich Peers, ob sie einen anderen Peer als Nachbarn akzeptieren oder nicht. Prinzipiell sollten Peers jedoch zur Erhöhung der Verfügbarkeit und der Skalierbarkeit bestrebt sein, so genannte "small world"-Strukturen im Netzwerk zu bilden. Somit werden sie auch Peers als Nachbarn akzeptieren, die unter allen ihnen bekannten Peers nicht die geringste Distanz zu ihnen besitzen. Eine grobe Dreiteilung der zahlenmäßig begrenzten Nachbarnliste 105 in nahe, mittlere und weit entfernte Nachbarpeers erweist sich als vorteilhaft.

Die Basisfunktionalität jedes Peers besteht aus fünf Diensten, die durch jeweils ein Dienstobjekt abgedeckt werden. Im weiteren Verlauf wurden die Basisdienste im einzelnen vorgestellt. Bei sämtlichen Diensten handelt es sich dabei um Komponenten im Sinne der Gleichung: "Komponente = Objekt + Beschreibung + standardisierte Dienstleistung". Diese Basisdienste bilden die Grundlage zur Errichtung eines virtuellen Suchnetzwerkes und dienen höherwertigen Diensten aus anderen Gruppenentitäten um neue Suchnetzwerke zu etablieren. Die Dienste sind so konzipiert, dass ihre Funktionalität von Diensten anderer semantischer Gruppen sinnvoll genutzt werden kann. Im Folgenden werden die Operationen spezifiziert und die zur jeweiligen Operation gehörenden Nachrichten, die über den jeweiligen Port dieser Dienste laufen.

Jede Nachricht im Peersystem besitzt einen global einheitlichen Nachrichtenheader. Die Basisfunktionalität sieht nicht vor, dass ein Peer selbständig andere Peers kontaktiert und Nachbarschaften eingeht. Ein Netzwerk kann in diesem Peerzustand nur manuell über Anfragen eines Klienten aufgebaut werden. Der Register-Dienst besteht aus mehreren Operationen. Nur die erste Operation "RegisterCommand" ist für die Kommunikation zwischen einem Klienten und einem Peer bestimmt. Die anderen Operationen dienen der netzinternen Kommunikation zwischen Peers. Bei den netzinternen Operationen gibt die erste Komponente des Operationsnamens die Richtung der ersten Nachricht aus Sicht des Dienst an, d. h. ob die Operation selbst initiiert wird oder durch eine externe Anfrage. Die Nachrichten selbst sind SOAP(XML)-Dokumente.

Ein Klient initiiert eine Registrierung seines Peers bei einem anderen Peer und somit den Aufbau einer Nachbarschaftsbeziehung, indem er die Nachricht "RegisterCommand" an den Peer sendet. Der Peer erkennt anhand des "Group"-Eintrags im Header der Nachricht, dass diese Nachricht für die Steuereinheit der Basisdienste bestimmt ist, und leitet die Anfrage an diese weiter. Die Steuereinheit wiederum erkennt anhand des "Service"-Eintrags im Header der Nachricht, dass diese Nachricht für den Register-Dienst bestimmt ist und übergibt sie an diesen. Sobald der Register-Dienst ein gültiges "Register-Command" erhalten hat, generiert er ein "RegisterRequest" und sendet es an den betreffenden Empfängerpeer. Dann startet der Dienst für diese Anfrage einen Timer. Falls der Timer abgelaufen ist, ohne dass eine Antwort vom Empfänger zurückgekommen ist, so wird der Registrierungsversuch als gescheitert gewertet und ein "Register-Fault" an den Klienten gesendet. Alle nach Ablauf des Timers ankommenden Antworten bzgl. dieser Anfrage werden verworfen. Wenn der Register-Dienst innerhalb der Frist ein "RegisterResponse" als Antwort erhalten hat, trägt er den Peer, mit dem eine neue Nachbarschaft eingegangen werden soll, in die Nachbarnliste ein. Auch ein Eintrag in der Peerliste erfolgt. Der Klient erhält als Rückmeldung ein "RegisterReply". Wenn der Register-Dienst ein "Register-Fault" erhalten hat, weil z. B. die Nachbarnliste des kontaktierten Peers voll ist, so wird diese Nachricht an den Klienten weitergeleitet.

Jeder Peer muss sich periodisch bei seinen Nachbarn rückmelden, wobei die Zeitspanne T zwischen zwei Rückmeldungen ein globaler Parameter ist und vom Peersystem vorgegeben ist. Dazu schickt jeder Peer eine vom Register-Dienst generierte "A-live"-Nachricht an seine Nachbarpeers. Die "Alive"-Nachricht trägt außer dem Header, den jede Peernachricht besitzt, keine weiteren Informationen. Erhält ein Peer eine Alive-Nachricht, so leitet er sie an den Register-Dienst weiter. Dieser aktualisiert in der Nachbarnliste den "Alive-Zeitstempel" für den betreffenden Peer. Der Register-Dienst überwacht diese Zeitstempel-Einträge und entfernt Peers aus der Nachbarnliste, falls ein bestimmtes Vielfaches der Rückmeldungsperiode T überschritten wurde.

Die Basisfunktionalität sieht nicht vor, dass ein Peer selbständig die Nachbarschaft mit einem Peer auflöst. Ein Nachbarschaftsverhältnis kann in der "generic"-Gruppe nur manuell über Anfragen des Klienten aufgelöst werden. Der Deregister-Dienst besteht aus mehreren Operationen. Ein Klient initiiert die Auflösung einer Nachbarschaftsbeziehung seines Peers mit einem anderen Peer bzgl. der Gruppe "generic", indem er die Nachricht "DeregisterCommand" an seinen Peer sendet. Nachdem ein Peer von seinem Klienten ein "DeregisterCommand" erhalten und den entsprechenden Nachbarpeer aus seinen Nachbarlisten entfernt hat, sendet der Peer eine "DeregisterInfo"-Nachricht an den ehemaligen Nachbarpeer. Hat ein Peer von einem anderen Peer eine "DeregisterInfo"-Nachricht erhalten, so trägt auch dieser den Absender der Nachricht aus der zur Gruppe "generic" gehörenden Nachbarliste aus.

Der so genannte GetPeerInfo-Dienst dient dem Sammeln von Informationen über einen ganz bestimmten Peer, der nicht notwendigerweise ein Nachbar sein muss. Abhängig vom Wert des booleschen Diensteparameters "Extended" existieren zwei Arten von Antworten auf eine GetPeerInfo-Anfrage: Die kurze Antwort liefert nur Informationen über den gefragten Peer selbst bzgl. seiner Gruppenmitgliedschaften und Dienste. Die ausführliche Antwort liefert zusätzlich Informationen über die Nachbarn des gefragten Peers mit ihren Gruppenmitgliedschaften und ihren Diensten. Diese Informationen werden in der Peerliste eingetragen. Dieser Dienst wird zur Aktualisierung der Peerliste verwendet. Informationen über Peers, die im Netz gemeldet sind und zu einer bestimmten Gruppe gehören, werden gesammelt und in die Peerliste eingetragen. Für den Fall, dass Nachbarpeers einer bestimmten semantischen Gruppe nicht mehr erreichbar sind, muss ein Peer neue Nachbarschaften eingehen. Dazu bedient er sich der Informationen aus der Peerliste. Zudem benötigt ein Peer, der eine neue Gruppenentität geladen hat, stets einen weiteren Peer als Zugangsknoten zu dem Suchnetzwerk für diese Gruppe. Falls er in der Peerliste keinen Peer findet, der auch Mitglied dieser Gruppe ist, stößt die Steuereinheit der betreffenden Gruppenentität den GetPeers-Basisdienst an. Der GetPeers-Dienst besteht aus mehreren Operationen. Wie bei den übrigen Basisdiensten ist nur die erste Operation "GetPeersCommand" für die Kommunikation zwischen einem Klienten und seinem Peer bestimmt. Die anderen Operationen dienen der netzinternen Kommunikation zwischen Peers. Die Operation "GetPeersCommand" kann jedoch auch von Steuereinheiten anderer Gruppenentitäten angestoßen werden. Ein Klient oder eine Steuereinheit initiieren eine Aktualisierung der Peerliste ihres Peers bzgl. einer bestimmten Gruppe, indem sie die Nachricht "GetPeersCommand" an den Peer senden. Der Peer startet daraufhin eine Breitensuche im Suchnetzwerk "generic". Der Radius der Suche wird durch einen Parameter "Hops" festgelegt. Dieser wird dem Peer, zusammen mit dem Namen der semantischen Gruppe, vom Klienten bzw. der Steuereinheit mitgegeben.

Nachdem der GetPeers-Dienst ein "GetPeersCommand" erhalten hat, generiert er eine "GetPeersRequest"-Nachricht und schickt diese an all seine Nachbarn. Die Parameter "Hops" und "Group" werden aus dem vorhergehenden "GetPeersCommand" übernommen. Jedoch wird der Hops-Parameter vor dem Senden einer "GetPeersRequest"-Nachricht stets um den Wert "1" dekrementiert. In zwei weiteren Parametern trägt der Peer seinen Namen und seine Adresse ein, damit ein Peer, der zu der gesuchten Gruppe gehört und der über ein paar Hops die Anfrage erhalten hat, eine direkte Punkt-zu-Punkt-Verbindung zu dem suchenden Peer aufbauen kann. Er sendet alle Informationen über sich, die für einen vollständigen Eintrag in einer Peerliste notwendig sind. Dazu gehören seine Gruppenmitgliedschaften und die Namen der Dienste, die er als Mitglied der jeweiligen Gruppe verwaltet. Die Namen der Basisdienste werden nicht mitgesendet, da jeder Peer diese besitzt und die Grundfunktionalität eines jeden Peers darstellen.

Der GetPeers-Suchalgorithmus entspricht dem einer Breitensuche. Die Nachbarschaftskanten im Peer-Netzwerk werden nur für die Suche verwendet. Die positive Antwort auf eine Anfrage erfolgt durch direkte Punkt-zu-Punkt Kommunikation zwischen dem Peer, der die Anfrage initiiert hat und dem Peer, der die gesuchten Informationen besitzt.

Wie bereits erwähnt, muss ein Peer nicht alle Dienste, die zu einer semantischen Gruppe gehören auch tatsächlich anbieten. Allein das Wissen um die Existenz dieser Dienste, was softwaretechnisch mit dem Laden der Steuereinheit geschieht, reicht aus, damit ein Peer vollwertiges Mitglied des betreffenden Suchnetzwerks werden kann. Falls nun eine Steuereinheit eine Nachricht nicht an den entsprechenden Dienst weiterleiten kann, welcher im Header der Nachricht angegeben ist, so landet diese Nachricht beim "Default"-Dienst. Jede semantische Gruppe besitzt diesen Dienst, der zuständig ist, einen Peer zu finden, der diesen Dienst anbietet. Falls in der Peerliste kein entsprechender Eintrag vorhanden ist, so stößt der "Default"-Dienst den "GetService"-Basisdienst an. Der "GetService"-Dienst wird also aufgerufen, um nach einem Peer zu suchen, der einen bestimmten Dienst im Netzwerk anbietet. Da jeder Dienst einer semantischen Gruppe zugeordnet ist, erfolgt die Suche entlang der Kanten des Overlay-Netzwerks dieser Gruppe, falls zu dem Namen des gesuchten Dienstes auch der Name der Gruppe angegeben wird. Falls in der Anfrage keine Gruppe spezifiziert ist, erfolgt die Suche entlang der Nachbarschaftskanten des "generic"-Netzwerks. Der Suchalgorithmus des "GetService"-Dienstes entspricht wie der Suchalgorithmus des "GetPeers"-Dienstes einer Breitensuche. Der "GetService"-Dienst besteht aus mehreren Operationen. Die erste Operation "GetServiceCommand" ist für die Kommunikation zwischen einem Klienten bzw. einer Steuereinheit und dem "GetService"-Dienst bestimmt. Die anderen Operationen dienen der netzinternen Kommunikation zwischen Peers.

Eine Gruppenentität ist eine in sich geschlossene Komponente, die im stationären Betrieb eines Peers dynamisch hinzugeladen und auch wieder entfernt werden kann. Jede Gruppenentität beinhaltet gemäß Ausführungsbeispiel eine Steuereinheit, eine Distanzfunktion, einen Register-Dienst, einen Deregister-Dienst, einen Default-Dienst und eine Nachbarnliste. Optional können noch beliebig viele Anwendungsdienste einer Gruppenentität zugeordnet werden. Der erforderliche Default-Dienst ist für die Verarbeitung von Nachrichten zuständig, welche die Steuereinheit nicht an den zugehörigen Dienst weiterleiten kann, weil der Peer diesen Dienst nicht anbietet. Ob der Default-Dienst die erhaltenen Nachrichten an andere Peers im Netzwerk weiterleitet, die den zu der Nachricht gehörenden Dienst besitzen, ist optional. Im Folgenden wird die Vorgehensweise zur Implementierung einer Gruppenentität und der interne Ablauf beim Laden einer Gruppenentität im stationären Betrieb eines Peers beschrieben.

Die Implementierung einer Gruppenentität erfolgt in drei Schritten, siehe Figur 7. Zuerst wird ein XML-Dokument 120 angelegt, in dem die Komponenten der betreffenden Gruppenentität aufgeführt sind. Zu jeder Komponente existiert auch eine Referenz, die angibt, in welcher Bibliothek 125 sich die Klasse befindet. Danach werden die WSDL-Dienstebeschreibungen 121 spezifiziert. Nachdem nun die Schnittstelle der Gruppenentität feststeht, werden die entsprechenden Klassen implementiert.

Wenn ein Peer von einem Benutzer die Anweisung erhält, eine neue Gruppenentität zu laden, sieht der Peer in dem gleichnamigen XML-Dokument 120 nach, in welcher Bibliothek 125 (DLL = Dynamisch ladbare Klassenbibliotheken) sich die Steuereinheit befindet und instanziiert diese. Die Steuereinheit wiederum lädt die in dem XML-Dokument 120 aufgeführten Dienste 122 und die Distanzfunktion 124 und generiert zudem weitere evtl. erforderliche Komponenten. Sobald ein Dienst 122 geladen ist, lädt der Dienst 122 seine WSDL-Datei 121 und übergibt die "types"-Komponente der WSDL-Dienstebeschreibung 121 an den Klassengenerator, der die plattformabhängigen Nachrichtenklassen für die jeweiligen Dienste 122 generiert. Danach erfragt die Steuereinheit 123 bei jedem Dienst einzeln seine WSDL-Dienstebeschreibung 121 und übergibt sie dem Peer. Zuletzt wird der Zustandsautomat der Steuereinheit für den stationären Betrieb gestartet.

Im Folgenden wird die für den stationären Betrieb vorgesehene Gesamtarchitektur beschrieben: An den Peer sind die für den Betrieb notwendigen Basisdienste und die Gruppenentitäten angekoppelt. Die Basisdienste werden bei der Initialisierung des Peers, d. h. mit der Instanziierung einer Peerklasse, geladen, die Gruppenentitäten können im stationären Betrieb über eine Bedienerschnittstelle geladen und auch wieder entfernt werden. Die interne Kommunikation zwischen Peer, Basisdiensten und Gruppenentitäten erfolgt über SOAP(XML)-Nachrichtenaustausch. Dies gilt auch für die Kommunikation zwischen Peers im Netzwerk. An den Peer kann man beliebige grafische Schnittstellen bzw. Frontends ankoppeln.

## Patentansprüche

1. System zur Bereitstellung von Diensten (1, 2) innerhalb eines Netzwerks (3) mit gekoppelten Rechnern (4, 5),
• wobei die Rechner (4, 5) Speichermittel (20) zur Speicherung von Objekten (7, 8) aufweisen,
• wobei die Objekte (7, 8) erste Mittel (21) zum Laden, Speichern und Verarbeiten von Beschreibungen (11) von Gruppen (9, 10) aufweisen,
• wobei die Objekte (7, 8) zweite Mittel (22) zum Laden, Speichern und Ausführen von den jeweiligen Gruppen (9, 10) zugeordneten Diensten (1, 2) aufweisen,
• wobei einer Gruppe (9, 10) jeweils die Objekte (7, 8) zugehörig sind, welche die Beschreibung (11) der jeweiligen Gruppe (9, 10) gespeichert haben,
• wobei die Beschreibung (11) einer Gruppe (9, 10) eine Semantik der der jeweiligen Gruppe (9, 10) zugeordneten Dienste (1, 2) bestimmt,
• wobei die Objekte (7, 8) Suchmittel (33) zum parallelen Suchen innerhalb verschiedener Gruppen (9, 10) nach Objekten (7, 8) mit den der jeweiligen Gruppe (9, 10) zugeordneten und von den jeweiligen Objekten (7, 8) ausführbaren Diensten (1, 2) aufweisen und
• wobei die Objekte (7, 8) dritte Mittel (23) zum Initiieren der Ausführung der von einem anderen Objekt (7, 8) der Gruppe (9, 10) ausführbaren, der jeweiligen Gruppe (9, 10) zugeordneten Dienste (1, 2) aufweisen.

2. System nach Anspruch 1, **dadurch gekennzeichnet, dass** die Objekte (7, 8) vierte Mittel (24) zum Auffinden, Entladen und/oder Definieren der Beschreibungen (11) von Gruppen (9, 10) aufweisen.

3. System nach Anspruch 1 oder 2, **dadurch gekennzeichnet, dass** die Objekte (7, 8) fünfte Mittel (25) zum Auffinden und/oder Definieren der den Gruppen (9, 10) zugeordneten Dienste (1, 2) aufweisen.

4. System nach einem der vorhergehenden Ansprüche, **dadurch gekennzeichnet, dass** die Objekte (7, 8) sechste Mittel (26) zum Ermitteln von Zugehörigkeiten des jeweiligen Objekts (7, 8) zu den Gruppen (9, 10) aufweisen.

5. System nach einem der vorhergehenden Ansprüche, **dadurch gekennzeichnet, dass** die Objekte (7, 8) siebte Mittel (27) zum Laden und Ausführen einer Distanzfunktion (38) aufweisen, wobei die Distanzfunktion (38) zur Bestimmung der semantischen Distanz zwischen jeweils zwei Objekten (7, 8) vorgesehen ist.

6. System nach Anspruch 5, **dadurch gekennzeichnet, dass** die Objekte (7, 8) achte Mittel (28) zum Generieren einer Liste der Objekte (7, 8) mit der geringsten semantischen Distanz zu dem jeweiligen Objekt (7, 8) aufweisen.

7. System nach Anspruch 5 oder 6, dass die Objekte (7, 8) neunte Mittel (29) zur Beeinflussung der Suchmittel (33) zum Suchen nach Objekten (7, 8) in Abhängigkeit der jeweiligen semantischen Distanz aufweisen.

8. System nach einem der vorhergehenden Ansprüche, **dadurch gekennzeichnet, dass** die Objekte (7, 8) zehnte Mittel (30) zum Verarbeiten von Beschreibungen (35) der Dienste (1, 2) aufweisen.

9. System nach einem der vorhergehenden Ansprüche, **dadurch gekennzeichnet, dass** die Objekte (7, 8) elfte Mittel (31) zum Weiterleiten von Suchanfragen nach durch das jeweilige Objekt (7, 8) nicht ausführbaren Diensten (1, 2) an weitere Objekte (7, 8) innerhalb der jeweiligen Gruppe (9, 10) aufweisen.

10. System nach einem der vorhergehenden Ansprüche, **dadurch gekennzeichnet, dass** Ergebnisse verschiedener Suchen kombinierbar sind.

11. System nach einem der vorhergehenden Ansprüche, **dadurch gekennzeichnet, dass** zwölfte Mittel (32) zum Erkennen von neuen Objekten (7, 8) innerhalb einer Gruppe (9, 10) vorgesehen sind.

12. System nach einem der vorhergehenden Ansprüche, **dadurch gekennzeichnet, dass** die Objekte (7, 8) einer Gruppe (9, 10) in hierarchischer Beziehung zueinander stehen.

13. System nach einem der vorhergehenden Ansprüche, **dadurch gekennzeichnet, dass** die Dienste (1, 2) zur Bereitstellung von Informationen vorgesehen sind.

14. System nach einem der vorhergehenden Ansprüche, **dadurch gekennzeichnet, dass** einem Objekt (7, 8) innerhalb einer Gruppe (9, 10) weitere Objekte (7, 8) der jeweiligen Gruppe (9, 10) nur partiell bekannt sind, wobei für das jeweilige Objekt (7, 8) alle weiteren Objekte (7, 8) der jeweiligen Gruppe (9, 10) zumindest mittelbar kommunikativ erreichbar sind.

15. System nach einem der vorhergehenden Ansprüche, **dadurch gekennzeichnet, dass** die Objekte (7, 8) Kommunikationsmittel (34) zur Übermittlung von Nachrichten (36) aufweisen, wobei die Kommunikationsmittel (34) Analysemittel (37) zur Analyse des semantischen Inhalts der Nachrichten (36) aufweisen.

16. System nach einem der vorhergehenden Ansprüche, **dadurch gekennzeichnet, dass** die Gruppen (9, 10) jeweils eine zusammenhängende Gruppe (9, 10) sind.

17. System nach einem der vorhergehenden Ansprüche, **dadurch gekennzeichnet, dass** das Netzwerk (3) mit gekoppelten Rechnern (4, 5) ein industrielles Automatisierungssystem ist.

18. Verfahren zur Bereitstellung von Diensten (1, 2) innerhalb eines Netzwerks (3) mit gekoppelten Rechnern (4, 5),
• wobei die Rechner (4, 5) Objekte (7, 8) speichern,
• wobei die Objekte (7, 8) Beschreibungen (11) von Gruppen (9, 10) laden, speichern und verarbeiten,
• wobei die Objekte (7, 8) den jeweiligen Gruppen (9, 10) zugeordnete Dienste (1, 2) laden, speichern und ausführen,
• wobei einer Gruppe (9, 10) jeweils die Objekte (7, 8) zugehörig sind, welche die Beschreibung (11) der jeweiligen Gruppe (9, 10) gespeichert haben,
• wobei die Beschreibung (11) einer Gruppe (9, 10) eine Semantik der der jeweiligen Gruppe (9, 10) zugeordneten Dienste (1, 2) bestimmt,
• wobei die Objekte (7, 8) parallel innerhalb verschiedener Gruppen (9, 10) nach Objekten (7, 8) mit den der jeweiligen Gruppe (9, 10) zugeordneten und von den jeweiligen Objekten (7, 8) ausführbaren Diensten (1, 2) suchen und
• wobei die Objekte (7, 8) die Ausführung der von einem anderen Objekt (7, 8) der Gruppe (9, 10) ausführbaren, der jeweiligen Gruppe (9, 10) zugeordneten Dienste (1, 2) initiieren.

19. Verfahren nach Anspruch 18, **dadurch gekennzeichnet, dass** die Objekte (7, 8) die Beschreibungen (11) von Gruppen (9, 10) auffinden, entladen und/oder definieren.

20. Verfahren nach Anspruch 18 oder 19, **dadurch gekennzeichnet, dass** die Objekte (7, 8) die den Gruppen (9, 10) zugeordneten Dienste (1, 2) auffinden und/oder definieren.

21. Verfahren nach einem der Ansprüche 18 bis 20, **dadurch gekennzeichnet, dass** die Objekte (7, 8) Zugehörigkeiten des jeweiligen Objekts (7, 8) zu den Gruppen (9, 10) ermitteln.

22. Verfahren nach einem der Ansprüche 18 bis 21, **dadurch gekennzeichnet, dass** die Objekte (7, 8) eine Distanzfunktion laden und ausführen, wobei die Distanzfunktion die semantische Distanz zwischen jeweils zwei Objekten (7, 8) bestimmt.

23. Verfahren nach Anspruch 22, **dadurch gekennzeichnet, dass** die Objekte (7, 8) eine Liste der Objekte (7, 8) mit der geringsten semantischen Distanz zu dem jeweiligen Objekt (7, 8) generieren.

24. Verfahren nach Anspruch 22 oder 23, dass die Objekte (7, 8) die Suche nach Objekten (7, 8) in Abhängigkeit der jeweiligen semantischen Distanz beeinflussen.

25. Verfahren nach einem der Ansprüche 18 bis 24, **dadurch gekennzeichnet, dass** die Objekte (7, 8) Beschreibungen (35) der Dienste (1, 2) verarbeiten.

26. Verfahren nach einem der Ansprüche 18 bis 25, **dadurch gekennzeichnet, dass** die Objekte (7, 8) Suchanfragen nach durch das jeweilige Objekt (7, 8) nicht ausführbaren Diensten (1, 2) an weitere Objekte (7, 8) innerhalb der jeweiligen Gruppe (9, 10) weiterleiten.

27. Verfahren nach einem der Ansprüche 18 bis 26, **dadurch gekennzeichnet, dass** Ergebnisse verschiedener Suchen kombiniert werden.

28. Verfahren nach einem der Ansprüche 18 bis 27, **dadurch gekennzeichnet, dass** neue Objekten (7, 8) innerhalb einer Gruppe (9, 10) erkannt werden.

29. Verfahren nach einem der Ansprüche 18 bis 28, **dadurch gekennzeichnet, dass** die Objekte (7, 8) einer Gruppe (9, 10) in hierarchischer Beziehung zueinander stehen.

30. Verfahren nach einem der Ansprüche 18 bis 29, **dadurch gekennzeichnet, dass** die Dienste (1, 2) Informationen bereitstellen.

31. Verfahren nach einem der Ansprüche 18 bis 30, **dadurch gekennzeichnet, dass** einem Objekt (7, 8) innerhalb einer Gruppe (9, 10) weitere Objekte (7, 8) der jeweiligen Gruppe (9, 10) nur partiell bekannt sind, wobei für das jeweilige Objekt (7, 8) alle weiteren Objekte (7, 8) der jeweiligen Gruppe (9, 10) zumindest mittelbar kommunikativ erreichbar sind.

32. Verfahren nach einem der Ansprüche 18 bis 31, **dadurch gekennzeichnet, dass** die Objekte (7, 8) Nachrichten (36) übermitteln, wobei der semantische Inhalt der Nachrichten (36) analysiert wird.

33. Verfahren nach einem der Ansprüche 18 bis 32, **dadurch gekennzeichnet, dass** die Gruppen (9, 10) jeweils eine zusammenhängende Gruppe (9, 10) sind.

34. Verfahren nach einem der Ansprüche 18 bis 33, **dadurch gekennzeichnet, dass** das Netzwerk (3) mit gekoppelten Rechnern (4, 5) ein industrielles Automatisierungssystem ist.
